# EUROPEAN PATENT APPLICATION

(11) **EP 4 397 697 A1**
(43) Date of publication of application: **10.07.2024**
(21) Application number: 23216431.9
(22) Date of filing: 13.12.2023
(51) Int. Cl.: C08J 3/20, B29B 7/90, B33Y 10/00, C08K 3/36, C08L 75/04, C08L 83/04

(54) **COLORED PARTICULATE BLENDS AND METHODS FOR PRODUCTION AND USE THEREOF**

(30) Priority: 04.01.2023 US 202318150089
(71) Applicant: Xerox Corporation, Webster, NY 14580 (US)
(72) Inventor: IVANCIC, Tomislav, Mississauga, L5K 2L1 (CA); KNAPIK, Benjamin, Etobicoke, M9B 0A1 (CA); LAWTON, David, Burlington, L7M 3N5 (CA)
(74) Representative: Grünecker Patent- und Rechtsanwälte PartG mbB

(57) **Abstract**

Colored particulate blends may be produced by combining thermoplastic polymer particulates that differ from one another in color. Such colored particulate blends may comprise: a first plurality of thermoplastic polymer particulates comprising a first thermoplastic polymer and a first colorant blended with the first thermoplastic polymer in an interior of the thermoplastic polymer particulates, and a second plurality of thermoplastic polymer particulates comprising a second thermoplastic polymer and, optionally, a second colorant blended with the second thermoplastic polymer in an interior of the thermoplastic polymer particulates. The first plurality of thermoplastic polymer particulates has a first color, and the second plurality of thermoplastic polymer particulates has a second color different than the first color, and the second colorant, if present, is different than the first colorant. The colored particulate blends are visually homogenous and appear as a single color different than the first color and the second color.

## Description

### TECHNICAL FIELD

The present disclosure relates to additive manufacturing and, more particularly, colored particulate blends and additive manufacturing methods utilizing colored particulate blends to form printed objects having coloration.

### BACKGROUND

Additive manufacturing, also known as three-dimensional (3-D) printing, is a rapidly growing technology area. Although additive manufacturing has traditionally been used for rapid prototyping activities, this technique is being increasingly employed for producing commercial and industrial parts (printed objects) in any number of complex shapes. Additive manufacturing processes operate by layer-by-layer deposition of either 1) a stream of molten printing material or a liquid precursor to a printing material or 2) powder particulates of a printing material. The layer-by-layer deposition usually takes place under control of a computer to deposit and consolidate the printing material in precise locations based upon a digital three-dimensional "blueprint" (a computer-aided design model) of the part being manufactured. In a particular example, consolidation of powder particulates may take place in a powder bed deposited layer-by-layer using a three-dimensional printing system that employs a laser or electron beam to heat precise locations of the powder bed, thereby consolidating specified powder particulates to form a part having a desired shape. Fusion of powder particulates in a powder bed may take place by selective laser sintering (SLS), which employs a laser to promote consolidation of powder particulates via localized heating.

Among the powder particulates usable in three-dimensional printing are those comprising thermoplastic polymers. Such powder particulates are referred to herein as thermoplastic polymer particulates or thermoplastic polymer particulates. Although a wide array of thermoplastic polymers are known, there are relatively few having properties compatible for use in current three-dimensional printing techniques, particularly when performing particulate consolidation by selective laser sintering. Thermoplastic polymers suitable for consolidation by selective laser sintering include those having a significant difference between the onset of melting and the onset of crystallization, which may allow for slight variations in print temperatures and promote good structural and mechanical integrity in the resulting printed part.

For good printing performance to be realized when using powder particulates, the powder particulates need to maintain good flow properties in the solid state. Flow properties may be evaluated, for example, by measuring the fraction of powder particulates from a sample that are able to pass through a standard sieve of a specified size and/or by measuring of the angle of repose. High fractions of sievable powder particulates may be indicative of the particulates existing as non-agglomerated, substantially individual particulates, which may be characteristic of ready powder flow. Relatively low values for the angle of repose may likewise be characteristic of ready powder flow. A relatively narrow particle size distribution and regularity of the particulate shape, typically spherical, in a sample may also aid in promoting good powder flow performance. Regularity of the particulate shape, particularly substantially spherical particulates, and a narrow particle size distribution may also promote close-packed or near close-packed particulates within a powder bed, which may further contribute to good printing performance.

Commercial powder particulates are oftentimes obtained by cryogenic grinding or precipitation processes, which may result in irregular particulate shapes and/or wide particle size distributions, both of which may contribute to poor powder flow and packing efficiency during additive manufacturing processes. Although poor powder flow performance may be addressed to some degree through dry blending powder particulates with fillers and flow aids as external additives, such approaches may have limited effectiveness with softer polymer materials, such as elastomers, due to particulate aggregation. Furthermore, fillers and flow aids may interact with powder particulates of varying shapes and/or sizes to various degrees and therefore may exhibit limited ability to regulate powder flow performance adequately during additive manufacturing processes. In addition, incorporation of significant quantities of fillers and flow aids within a printed object can be undesirable in some instances, as the fillers and flow aids may negatively impact mechanical properties.

As additive manufacturing has become more widely utilized for producing printed objects of various types, access to printed objects having a range of colors has become desirable in many instances. Commercial powder particulates suitable for additive manufacturing are typically produced from conventional thermoplastic polymers and are uncolored as a result (*i.e.,* the particulate color is native to the thermoplastic polymer itself, typically white or colorless). If coloration of a printed object or a portion thereof is desired, the color may be introduced following printing using processes such as painting, spraying, or dyeing, for example. The main drawback of post-printing introduction of color is that doing so lengthens manufacturing lines and potentially increases production costs. Custom color blends may be needed to introduce fine color details, and multiple passes may be needed to introduce a full range of colors to a printed object, which may further complicate manufacturing lines and increase inventory management issues. Moreover, the coloration may be introduced primarily as a surface layer on the printed object and not be overly robust as a result.

Another potential technique for adding coloration to a printed object is by utilizing colored powder particulates. Although commercial powder particulates are typically uncolored, a colorant sometimes may be successfully incorporated within powder particulates compatible for use in additive manufacturing processes. The colorant may be internal or external to the powder particulates. The foregoing color introduction approach may necessitate stockpiling multiple types of powder particulates having a range of fine color variations in order to introduce a desired multi-color scheme to a printed object, again leading to inventory management issues. In addition, use of colored particulates may require loading a three-dimensional printing system with different types of powder particulates at specified times to produce printed objects having an intended color, which may again complicate manufacturing lines for printed objects having multiple colors. Even if colored particulates can be successfully sourced, the differing powder flow performance of irregularly shaped and sized powder particulates can make printing with multiple types of powder particulates exceptionally challenging. Moreover, there is no ready way to introduce custom colors to a printed object when utilizing colored particulates having a limited palette of available colors.

### SUMMARY

The present disclosure relates to colored thermoplastic polymer particulates and additive manufacturing therewith.

In some embodiments, colored particulate blends described herein comprise: a first plurality of thermoplastic polymer particulates having a first color and comprising a first thermoplastic polymer; and a second plurality of thermoplastic polymer particulates having a second color different than the first color and comprising a second thermoplastic polymer. The colored particulate blend is printable by additive manufacturing, is visually homogeneous in appearance, and appears as a single color different than the first color and the second color.

In some or other embodiments, colored particulate blends described herein comprise: a first plurality of thermoplastic polymer particulates comprising a first thermoplastic polymer and a first colorant blended with the first thermoplastic polymer in an interior of the thermoplastic polymer particulates, the first plurality of thermoplastic polymer particulates having a first color; and a second plurality of thermoplastic polymer particulates comprising a second thermoplastic polymer and, optionally, a second colorant blended with the second thermoplastic polymer in an interior of the thermoplastic polymer particulates, the second plurality of thermoplastic polymer particulates having a second color different than the first color. The second colorant, if present, is different than the first colorant. The colored particulate blend is printable by additive manufacturing, is visually homogeneous in appearance, and appears as a single color different than the first color and the second color.

In some embodiments, methods for forming colored particulate blends comprise: providing a first plurality of thermoplastic polymer particulates having a first color and comprising a first thermoplastic polymer; providing a second plurality of thermoplastic polymer particulates having a second color different than the first color and comprising a second thermoplastic polymer; and combining the first plurality of thermoplastic polymer particulates with the second plurality of thermoplastic polymer particulates to obtain a colored particulate blend that is visually homogeneous in appearance and appears as a single color different than the first color and the second color. The first plurality of thermoplastic polymer particulates and the second plurality of thermoplastic polymer particulates are each produced separately by melt emulsification, and/or the first plurality of thermoplastic polymer particulates and the second plurality of thermoplastic polymer particulates have at least one of the following properties: a circularity differing by about 25% or less, a Hausner ratio differing by about 25% or less, an angle of repose differing by about 25% or less, a circularity within a range of about 0.9 to about 1.0, a Hausner ratio within a range of about 1.0 to about 1.5, an angle of repose within a range of about 20° to about 45°, an average diameter differing by about 10% or less, or an average diameter ranging from about 10 µm to about 120 µm and a diameter span ranging from about 0.2 to about 2.

In some or other embodiments, methods for forming colored particulate blends comprise: providing a first plurality of thermoplastic polymer particulates comprising a first thermoplastic polymer and a first colorant blended with the first thermoplastic polymer in an interior of the thermoplastic polymer particulates, the first plurality of thermoplastic polymer particulates having a first color; providing a second plurality of thermoplastic polymer particulates comprising a second thermoplastic polymer and, optionally, a second colorant blended with the second thermoplastic polymer in an interior of the thermoplastic polymer particulates, the second plurality of thermoplastic polymer particulates having a second color; wherein the second colorant, if present, is different than the first colorant; and combining the first plurality of thermoplastic polymer particulates with the second plurality of thermoplastic polymer particulates to obtain a colored particulate blend that is visually homogeneous in appearance and appears as a single color different than the first color and the second color.

### BRIEF DESCRIPTION OF THE DRAWINGS

The following figures are included to illustrate certain aspects of the present disclosure and should not be viewed as exclusive embodiments. The subject matter disclosed is capable of considerable modifications, alterations, combinations, and equivalents in form and function, as will occur to one having ordinary skill in the art and having the benefit of this disclosure.
FIG. 1 is a flow chart of a non-limiting example method for conducting melt emulsification.
FIG. 2 is a diagram of a representative thermoplastic polymer particulate produced by melt emulsification.
FIG. 3 is a photograph showing illustrative colored particulate blends at various blending ratios.
FIG. 4 is a photograph of an illustrative printed object formed using a colored particulate blend.

### DETAILED DESCRIPTION

The present disclosure relates to additive manufacturing and, more particularly, colored particulate blends and additive manufacturing methods utilizing colored particulate blends to form printed objects having coloration.

As discussed above, additive manufacturing processes employing powder particulates may be complicated by poor powder flow performance and incomplete particulate consolidation as a consequence of irregular particulate shapes and wide particle size distributions. Additive manufacturing processes in which coloration needs to be introduced to a printed object are increasingly more complicated still. Most commercial powder particulates suitable for additive manufacturing processes are uncolored, thereby necessitating post-printing introduction of coloration to the surface of a printed object. Even when colored powder particulates can be successfully sourced, the particles are typically irregular in shape and have wide particle size distributions, which may negatively impact powder flow performance and particulate consolidation. Moreover, the rather narrow color palette of commercially available colored powder particulates significantly limits the range of colors that may be introduced to a printed object.

Advantageous powder particulates suitable for additive manufacturing may be formed through melt emulsification of a thermoplastic polymer in a high-boiling inert solvent, particularly in the presence of nanoparticles as an emulsion stabilizer. U.S. Patent Application Publication 2021/0070993, filed on June 30, 2020 and incorporated herein by reference, describes thermoplastic polymer particulates formed by melt emulsification of a thermoplastic polymer in the presence of nanoparticles, particularly silica nanoparticles or other oxide nanoparticles. Thermoplastic polymer particulates produced by melt emulsification may be especially advantageous in terms of their narrow particle size distributions, regular particulate shape (highly spherical), good powder flow performance, and ready sintering during additive manufacturing processes. The nanoparticles present during melt emulsification may become robustly incorporated upon the outer surface of the thermoplastic polymer particulates during the melt emulsification process, possibly by becoming at least partially embedded in the thermoplastic polymer upon the outer surface. Surfactants optionally may be included during melt emulsification to further tailor the particle size distributions that are obtained. The nanoparticles and/or surfactants are typically present in very small quantities during melt emulsification and do not significantly alter the structural integrity of printed objects formed from the thermoplastic polymer particles, nor the coloration resulting within the printed object through application of the disclosure herein. Optionally, the nanoparticles may be removed following melt emulsification in some instances.

Colorants may be introduced into thermoplastic polymer particulates produced by the foregoing melt emulsification processes as well. The colorant may be melt blended or dry blended with a thermoplastic polymer prior to subjecting the thermoplastic polymer to melt emulsification, or the colorant may be introduced directly into the melt emulsification process itself. In either case, the colorant may become distributed throughout the thermoplastic polymer within the interior of the thermoplastic polymer particulates. Although thermoplastic polymer particulates having coloration may be produced through melt emulsification in at least one of the foregoing manners, doing so still does not resolve the inventory management issues resulting from the need to stockpile a wide range of colored thermoplastic polymer particulates to facilitate printing of a diverse palette of colors.

The present disclosure demonstrates the surprising result that colored thermoplastic polymer particulates produced by melt emulsification may be successfully combined to produce custom color blends that may remain readily printable by additive manufacturing processes, such as selective laser sintering. The narrow particle size distribution, substantially spherical particle shape, and ready powder flow properties arising from melt emulsification processes employing nanoparticles as an emulsion stabilizer may facilitate the foregoing. That is, the desirable properties of thermoplastic polymer particulates produced by melt emulsification promote good powder flow properties and, in turn, ready printability by additive manufacturing, even after combining thermoplastic polymer particulates together. In particular, colored thermoplastic polymer particulates having two or more different colors may be produced by separate melt emulsification processes, which are then dry blended together. The dry blending process may produce well-mixed colored particulate blends that appear visually homogeneous in color over a wide range of blending ratios and display a single (blended) color different than the colors originally being mixed.

The addition of a colorant does not significantly alter the advantageous physical properties of thermoplastic polymer particulates formed via melt emulsification (e.g., narrow particle size distribution, spherical shape and good powder flow performance). The foregoing may facilitate printability of the thermoplastic polymer particulates by additive manufacturing processes. Thus, mixing a small fraction of colored masterbatch thermoplastic together with an uncolored (virgin) thermoplastic material does not significantly impact the particle size distribution or the powder flow performance of the final powder particulates compared to uncolored thermoplastic polymer particulates alone. Accordingly, a given set of melt emulsification conditions may be utilized for producing colored and uncolored thermoplastic polymer particulates that may be suitably combined together. Moreover, various ratios of the colored and uncolored thermoplastic polymer particulates (or various ratios of two or more different thermoplastic polymer particulates having different colors) may be combined together to facilitate generation of printed objects having custom coloration.

Although it is usually desirable to combine thermoplastic polymer particulates together that have similar particle size distributions, it is to be appreciated that in certain circumstances, thermoplastic polymer particulates having different sizes and coloration may also be suitably combined, provided the powder flow properties otherwise remain similar. For example, a mixture of two or more types of thermoplastic polymer particulates having spaced apart and narrow particle size distributions may be desirable in some circumstances to increase the resulting color homogeneity. In addition, blends of thermoplastic polymer particulates having different particle size distributions may afford tighter packing in a powder bed prior to consolidation, thereby leading to less void formation in the resulting printed object.

Advantageously, by forming thermoplastic polymer particulates in a few base colors (*e*.*g*., primary colors such as red, blue, and yellow and, optionally, uncolored thermoplastic polymer particulates), colored particulate blends having any color may be accessed through an appropriate combination of two or more types of thermoplastic polymer particulates at various blending ratios. Because melt emulsification processes may afford narrow particle size distributions in combination with physical parameters leading to good powder flow performance, colored thermoplastic polymer particulates from separate production batches having different colors (or colored thermoplastic polymer particulates in combination with uncolored thermoplastic polymer particulates), similar powder flow performance, and narrow particle size distributions may be combined together to afford colored particulate blends having customized colors without negatively impacting the printing performance.

By providing thermoplastic polymer particulates in a few base colors and dry blending the thermoplastic polymer particulates into custom color blends on an as-needed basis for printing an object having a specified coloration scheme, a significant improvement in inventory management issues may be realized. The colored particulate blends may be pre-mixed by dry blending the various thermoplastic polymer particulates (powder particulates) before supplying the powder particulates to an additive manufacturing system, or the colored particulate blends may be formed *in situ* within an additive manufacturing system during a printing process. In either case, an essentially limitless color palette suitable for additive manufacturing may be realized.

As used herein, the term "immiscible" refers to a mixture of components that, when combined, form two or more phases that have less than 5 wt. % solubility in each other at ambient pressure and at room temperature or at or above the melting point of the component if the component is solid at room temperature. For example, polyethylene oxide having 10,000 g/mol molecular weight is a solid at room temperature and has a melting point of 65°C. Therefore, said polyethylene oxide is immiscible with a material that is liquid at room temperature if said material and said polyethylene oxide have less than 5 wt. % solubility in each other at 65°C or above.

As used herein, the term "thermoplastic polymer" refers to a polymer material that softens and hardens reversibly on heating and cooling. Thermoplastic polymers encompass thermoplastic elastomers.

As used herein, the term "elastomer" refers to a copolymer comprising a crystalline "hard" section and an amorphous "soft" section. In the case of a polyurethane, the crystalline section may include a portion of the polyurethane comprising the urethane functionality and optional chain extender group, and the soft section may include the polyol, for instance.

As used herein, the term "polyurethane" refers to a polymeric reaction product of a diisocyanate, a polyol, and an optional chain extender.

As used herein, the term "oxide" refers to both metal oxides and non-metal oxides. For purposes of the present disclosure, silicon is considered to be a metal.

As used herein, the term "oxide nanoparticles" refers to a particulate material having a particle size ranging from about 1 nm to about 500 nm and comprising a metal oxide or a non-metal oxide.

As used herein, the terms "associated," "association," and grammatical variations thereof refer to chemical bonding and/or physical adherence of nanoparticles to a surface. Without being limited by theory, it is believed that the associations described herein between thermoplastic polymers and nanoparticles in thermoplastic polymer particulates are primarily due to physical adherence. However, chemical bonding may be occurring to some degree in certain instances.

As used herein, the term "embed" refers to a nanoparticle at least partially extending into a thermoplastic polymer upon the outer surface of a thermoplastic polymer particulate, such that the thermoplastic polymer is in contact with the nanoparticle to a greater degree than if the nanoparticle were simply tangentially laid on the outer surface of the thermoplastic polymer particulate.

As used herein, the term "D₁₀" refers to a diameter at which 10% of the sample (on a volume basis unless otherwise specified) is comprised of particulates having a diameter less than said diameter. As used herein, the term "D₅₀" refers to a diameter at which 50% of the sample (on a volume basis unless otherwise specified) is comprised of particulates having a diameter less than said diameter. The D₅₀ value may also be referred to as the "average particle size." As used herein, the term "D₉₀" refers to a diameter at which 90% of the sample (on a volume basis unless otherwise specified) is comprised of particulates having a diameter less than said diameter.

As used herein, the terms "diameter span," "span" and "span size" provide an indication of the breadth of a particle size distribution and is defined as (D₉₀-D₁₀)/D₅₀.

Particle size can be determined by light scattering techniques using a Malvern MASTERSIZER^{™} 3000 or analysis of optical digital micrographs. Unless otherwise specified, light scattering techniques are used for analyzing particle size in the disclosure herein. For light scattering techniques, the control samples were glass beads with a diameter within the range of 15 µm to 150 µm under the tradename Quality Audit Standards QAS4002^{™} obtained from Malvern Analytical Ltd. Samples were analyzed as dry powders, unless otherwise indicated. The particulates analyzed were dispersed in air and analyzed using the AERO S dry powder dispersion module with the MASTERSIZER^{™} 3000. The particulate sizes were derived using instrument software from a plot of volume density as a function of size.

As used herein, the terms "circularity" and "sphericity" refer to how close a particulate is to a perfect sphere. To determine circularity, optical microscopy images are taken of the particulates. The perimeter (P) and area (A) of the particulate in the plane of the microscopy image is calculated (*e*.*g*., using a SYSMEX FPIA 3000 particulate shape and particulate size analyzer, available from Malvern Instruments). The circularity of the particulate is C_{EA}/P, where C_{EA} is the circumference of a circle having the area equivalent to the area (A) of the actual particulate. Circularity values less than 1 indicate deviation from perfect circularity.

As used herein, the melting point of a thermoplastic polymer, unless otherwise specified, is determined by ASTM E794-06(2018) with 10°C/min ramping and cooling rates. As used herein, the softening temperature or softening point of a thermoplastic polymer, unless otherwise specified, is determined by ASTM D6090-17. The softening temperature can be measured by using a cup and ball apparatus available from Mettler-Toledo using a 0.50 gram sample with a heating rate of 1°C/min.

As used herein, the term "sintering window," when referring to performance of thermoplastic polymer particulates, refers to the difference between the melting temperature (Tm) onset and the crystallization temperature (Tc) onset. Tm and Tc are determined by differential scanning calorimetry per ASTM E794-06(2018) with 10°C/min ramping and cooling rates.

As used herein, the term "shear" refers to stirring or a similar process that induces mechanical agitation in a fluid.

Angle of repose is a measure of the flowability of a powder. Angle of repose measurements are determined using a Hosokawa Micron Powder Characteristics Tester PT-R using ASTM D6393-14 "Standard Test Method for Bulk Solids" Characterized by Carr Indices."

Hausner ratio (Hᵣ) is a measure of the flowability of a powder and is calculated by Hᵣ = ρₜₐₚ/ρ_{bulk}, where ρ_{bulk} is the bulk density per ASTM D6393-14 and ρₜₐₚ is the tapped density per ASTM D6393-14.

As used herein, viscosity of carrier fluids are reported as the kinematic viscosity at 25°C, unless otherwise specified, measured per ASTM D445-19. For commercially procured carrier fluids (*e.g.,* PDMS oil), the kinematic viscosity data cited herein was provided by the manufacturer, whether measured according to the foregoing ASTM or by another standard measurement technique.

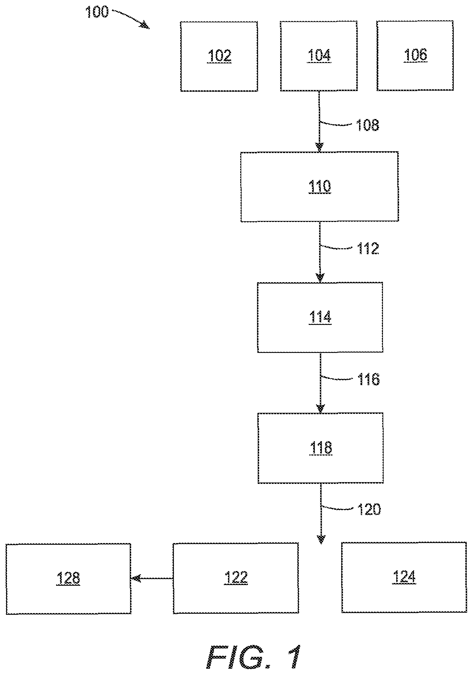

To provide additional context for the present disclosure, non-limiting melt emulsification processes are described in reference to FIG. 1. FIG. 1 is a flow chart of a non-limiting example method 101 for conducting melt emulsification. Thermoplastic polymer 102, carrier fluid 104, and nanoparticles 106 (or nanoparticles and optional surfactant 106) are combined 108 to produce mixture 110. Thermoplastic polymer 102, carrier fluid 104, and nanoparticles 106 may be added in any order and include mixing and/or heating during the process of combining 108. As described further below, a colorant may be introduced within thermoplastic polymer 102 or may alternately be combined directly with carrier fluid 104.

Mixture 110 is then processed 112 by applying sufficiently high shear to mixture 110 at a temperature greater than or equal to the melting point or softening temperature of thermoplastic polymer 102 to form melt emulsion 114. Because the temperature is at or above the melting point or softening temperature of thermoplastic polymer 102, thermoplastic polymer 102 becomes a polymer melt. The shear rate is sufficient to disperse the polymer melt in carrier fluid 104 as liquefied droplets. Without being limited by theory, it is believed that, all other factors being the same, increasing shear should decrease the size of the liquefied droplets in carrier fluid 104. However, at some point there may be diminishing returns on increasing shear and decreasing droplet size, or there may be disruptions to the droplet contents that decrease the quality of particulates produced therefrom.

Melt emulsion 114 is then cooled 116 to solidify the liquefied droplets into thermoplastic polymer particulates (also referred to herein as solidified thermoplastic polymer particulates, powder particulates, or particulates). Cooled mixture 118 can then undergo treatment 120 to isolate thermoplastic polymer particulates 122 from other components 124 (*e*.*g*., carrier fluid 104, excess nanoparticles 106, colorant, other additives, and the like). Treatment 120 may include at least washing cooled mixture 118 with solvent to remove carrier fluid 104. Optionally, thermoplastic polymer particulates 122 may undergo further processing or purification to produce purified thermoplastic polymer particulates 128.

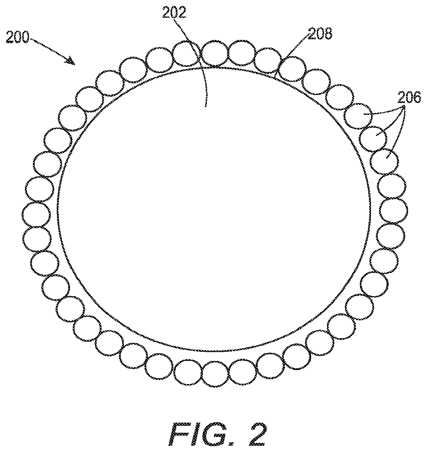

FIG. 2 is a diagram of a representative thermoplastic polymer particulate produced by melt emulsification. As shown, thermoplastic polymer particulate 200 comprises thermoplastic polymer 202 within the interior of thermoplastic polymer particulate 200 and nanoparticles 206 coating outer surface 208 of thermoplastic polymer particulate 200. Nanoparticles 206 may be present as a full or partial coating upon outer surface 208. Depending on various factors, such as the type of thermoplastic polymer 202, the temperature reached during melt emulsification, and the cooling rate, nanoparticles 206 may become at least partially embedded within outer surface 208. Even without embedment taking place, nanoparticles 206 may remain robustly associated with thermoplastic polymer particulates 200 to facilitate their further use. In contrast, dry blending already formed thermoplastic polymer particulates (*e*.*g*., formed by cryogenic grinding or precipitation processes) with a flow aid like silica nanoparticles (*e*.*g*., fumed silica nanoparticles) does not result in a robust, uniform coating of the flow aid upon the thermoplastic polymer particulates. When present, a colorant may also be present within the interior of thermoplastic polymer particulate 200.

The thermoplastic polymer and carrier fluid for producing specified thermoplastic polymer particulates may be chosen such that the thermoplastic polymer and the carrier fluid are immiscible at the temperature at which melt emulsification is conducted. An additional factor for choosing a suitable pairing of thermoplastic polymer and carrier fluid that may be considered is the viscosity difference between the resulting liquefied droplets and the carrier fluid. The viscosity difference may impact droplet formation and particle size distribution. Without being limited by theory, it is believed that when the viscosities of the liquefied droplets and the carrier fluid are too similar, the circularity of the product as a whole may deviate from near circularity. In addition to the viscosity difference, the presence of nanoparticles and optionally surfactants and the amount thereof may influence the average particle size and particle size distribution as well.

Examples of suitable thermoplastic polymers include, but are not limited to, polyamides, polyurethanes, polyethylenes, polypropylenes, polyacetals, polycarbonates, polybutylene terephthalate (PBT), polyethylene terephthalate (PET), polyethylene naphthalate (PEN), polytrimethylene terephthalate (PTT), polyhexamethylene terephthalate, polystyrenes, polyvinyl chlorides, polytetrafluoroethenes, polyesters (e.g., polylactic acid), polyethers, polyether sulfones, polyetherether ketones, polyacrylates, polymethacrylates, polyimides, acrylonitrile butadiene styrene (ABS), polyphenylene sulfides, vinyl polymers, polyarylene ethers, polyarylene sulfides, polysulfones, polyether ketones, polyamide-imides, polyetherimides, polyetheresters, copolymers comprising a polyether block and a polyamide block (PEBA or polyether block amide), grafted or ungrafted thermoplastic polyolefins, functionalized or non-functionalized ethylene/vinyl monomer polymer, functionalized or non-functionalized ethylene/alkyl (meth)acrylates, functionalized or non-functionalized (meth)acrylic acid polymers, functionalized or non-functionalized ethylene/vinyl monomer/alkyl (meth)acrylate terpolymers, ethylene/vinyl monomer/carbonyl terpolymers, ethylene/alkyl (meth)acrylate/carbonyl terpolymers, methylmethacrylate-butadiene-styrene

(MBS)-type core-shell polymers, polystyrene-block-polybutadiene-block-poly(methyl methacrylate) (SBM) block terpolymers, chlorinated or chlorosulphonated polyethylenes, polyvinylidene fluoride (PVDF), phenolic resins, poly(ethylene/vinyl acetate)s, polybutadienes, polyisoprenes, styrenic block copolymers, polyacrylonitriles, silicones, and the like, and any combination thereof. Copolymers comprising one or more of the foregoing may also be used in the methods and systems of the present disclosure.

Suitable thermoplastic polymers may be elastomeric or non-elastomeric. Some of the foregoing examples of thermoplastic polymers may be elastomeric or non-elastomeric depending on the exact composition of the polymer. For example, a polyolefin that is a copolymer of ethylene and propylene may be elastomeric or not depending on the amount of propylene in the polymer.

Thermoplastic elastomers generally fall within one of six classes: styrenic block copolymers, thermoplastic polyolefin elastomers, thermoplastic vulcanizates (also referred to as elastomeric alloys), thermoplastic polyurethanes, thermoplastic copolyesters, and thermoplastic polyamides (typically block copolymers comprising polyamide). Examples of thermoplastic elastomers can be found in Handbook of Thermoplastic Elastomers, 2nd ed., B. M. Walker and C. P. Rader, eds., Van Nostrand Reinhold, New York, 1988. Examples of thermoplastic elastomers include, but are not limited to, elastomeric polyamides, polyurethanes, copolymers comprising a polyether block and a polyamide block (PEBA or polyether block amide), methyl methacrylate-butadiene-styrene (MBS)-type core-shell polymers, polystyrene-block-polybutadiene-block-poly(methyl methacrylate) (SBM) block terpolymers, polybutadienes, polyisoprenes, styrenic block copolymers, and polyacrylonitriles), silicones, and the like. Elastomeric styrenic block copolymers may include at least one block selected from the group of isoprene, isobutylene, butylene, ethylene/butylene, ethylene-propylene, and ethylene-ethylene/propylene. More specific elastomeric styrenic block copolymer examples include, but are not limited to, poly(styrene-ethylene/butylene), poly(styrene-ethylene/butylene-styrene), poly(styrene-ethylene/propylene), styrene-ethylene/propylene-styrene), poly(styrene-ethylene/propylene-styrene-ethylene-propylene), poly(styrene-butadiene-styrene), poly(styrene-butylene-butadiene-styrene), and the like, and any combination thereof.

Examples of polyamides include, but are not limited to, polycaproamide (nylon 6, polyamide 6, or PA6), poly(hexamethylene succinamide) (nylon 4,6, polyamide 4,6, or PA4,6), polyhexamethylene adipamide (nylon 6,6, polyamide 6,6, or PA6,6), polypentamethylene adipamide (nylon 5,6, polyamide 5,6, or PA5,6), polyhexamethylene sebacamide (nylon 6,10, polyamide 6,10, or PA6,10), polyundecaamide (nylon 11, polyamide 11, or PA11), polydodecaamide (nylon 12, polyamide 12, or PA12), and polyhexamethylene terephthalamide (nylon 6T, polyamide 6T, or PA6T), nylon 10,10 (polyamide 10,10 or PA10,10), nylon 10,12 (polyamide 10,12 or PA10,12), nylon 10,14 (polyamide 10,14 or PA10,14), nylon 10,18 (polyamide 10,18 or PA10,18), nylon 6,18 (polyamide 6,18 or PA6,18), nylon 6,12 (polyamide 6,12 or PA6,12), nylon 6,14 (polyamide 6,14 or PA6,14), nylon 12,12 (polyamide 12,12 or PA12,12), and the like, and any combination thereof. Copolyamides may also be used. Examples of copolyamides include, but are not limited to, PA 11/10,10, PA 6/11, PA 6,6/6, PA 11/12, PA 10,10/10,12, PA 10,10/10,14, PA 11/10,36, PA 11/6,36, PA 10,10/10,36, PA 6T/6,6, and the like, and any combination thereof. A polyamide followed by a first number comma second number is a polyamide having the first number of backbone carbons between the nitrogens for the section having no pendent =O and the second number of backbone carbons being between the two nitrogens for the section having the pendent =O. By way of non-limiting example, nylon 6,10 is [NH-(CH₂)₆-NH-CO-(CH₂)₈-CO]ₙ. A polyamide followed by number(s) backslash number(s) is a copolymer of the polyamides indicated by the numbers before and after the backslash.

Examples of polyurethanes include, but are not limited to, polyether polyurethanes, polyester polyurethanes, mixed polyether and polyester polyurethanes, the like, and any combination thereof. Examples of thermoplastic polyurethanes include, but are not limited to, poly[4,4'-methylenebis(phenylisocyanate)-alt-1,4-butanediol/di(propylene glycol)/polycaprolactone], ELASTOLLAN^{®} 1190A (a polyether polyurethane elastomer, available from BASF), ELASTOLLAN^{®} 1190A10 (a polyether polyurethane elastomer, available from BASF), the like, and any combination thereof.

Suitable thermoplastic polymers may have a melting point or softening temperature of about 50°C to about 450°C, or about 50°C to about 125°C, or about 100°C to about 175°C, or about 150°C to about 280°C, or about 200°C to about 350°C, or about 300°C to about 450°C. In addition, suitable thermoplastic polymers may have a glass transition temperature (ASTM E1356-08(2014) with 10°C/min ramping and cooling rates) of about -50°C to about 400°C, or about -50°C to about 0°C, or about -25°C to about 50°C, or about 0°C to about 150°C, or about 100°C to about 250°C, or about 150°C to about 300°C, or about 200°C to about 400°C.

The thermoplastic polymer undergoing melt emulsification may optionally comprise an additive. The additive may be melt blended, dry blended, or otherwise co-mingled with the thermoplastic polymer prior to adding the thermoplastic polymer to the carrier fluid during melt emulsification. Therefore, in the liquefied droplets and resultant thermoplastic polymer particulates, the additive may present throughout the interior of the individual thermoplastic polymer particulates or liquefied droplets. Accordingly, for clarity, such additives may be referred to herein as "internal additives." Colorants are but one example of internal additives that may be suitable for use in the disclosure herein. Nanoparticles, in contrast, are external additives because they are not previously co-mingled with the thermoplastic polymer prior to melt emulsification and primarily localize upon the outer surface of the thermoplastic polymer particulates during melt emulsification.

Examples of internal additives include, but are not limited to, fillers, strengtheners, pH regulators, colorants, antioxidants, stabilizers, the like, and combinations thereof. Examples of fillers include, but are not limited to, glass fibers, glass particulates, mineral fibers, carbon fiber, oxide particulates (*e*.*g*., titanium dioxide and zirconium dioxide), metal particulates (*e*.*g*., aluminum powder), the like, and any combination thereof. Examples of colorants include, pigments, dyes, and the like, which may be organic or inorganic in nature. The colorant may be a fixed colorant, or the colorant may change its color in response to a stimulus, such as thermal activation (*e*.*g*., during melt emulsification), oxidation, or the like. Suitable colorants are not believed to be particularly limited, provided that the colorant is thermally stable to the melt emulsification conditions and incorporates into the chosen thermoplastic polymer to a desired degree. A wide range of suitable colorants will be known by one having ordinary skill in the art. Illustrative colorants may include S-46051 Yellow TPU Masterbatch, S-54034 Red TPU Masterbatch, S-700150 Royal Blue TPU Masterbatch, S-64622 Light Green TPU Masterbatch, all available from RTP Company.

When present, colorants or other internal additives may be present in the thermoplastic polymer at a loading ranging from about 0.1 wt. % to about 60 wt. %, or about 0.1 wt. % to about 5 wt. %, or about 1 wt. % to about 10 wt. %, or about 5 wt. % to about 20 wt. %, or about 10 wt. % to about 30 wt. %, or about 25 wt. % to about 50 wt. %, or about 40 wt. % to about 60 wt. %, each based on the mass of the thermoplastic polymer. When introduced as a colored masterbatch to form colored thermoplastic polymer particulates, the colored masterbatch may be combined with an uncolored thermoplastic polymer during melt emulsification to form colored thermoplastic polymer particulates having a specified color. For commercial colored masterbatches, the proportion of colored masterbatch to uncolored thermoplastic polymer is usually manufacturer-recommended to afford a manufacturer-specified color value in the resulting blended polymer. In general, the colored masterbatch may be combined with uncolored thermoplastic polymer during melt emulsification at a 0.5% to about 15% by weight of total polymer, or about 1% to about 10%, or about 1% to about 6%, or about 2% to about 4%. Alternately, a colored masterbatch and an uncolored thermoplastic polymer may be combined with one another by melt blending prior to performing melt emulsification, and the resulting melt blend may be processed by melt emulsification to form the colored particulates described herein.

Suitable carrier fluids may have a viscosity at 25°C of about 1,000 cSt to about 150,000 cSt, or about 1,000 cSt to about 60,000 cSt, or about 40,000 cSt to about 100,000 cSt, or about 75,000 cSt to about 150,000 cSt. Examples of suitable carrier fluids include, but are not limited to, silicone oil, fluorinated silicone oils, perfluorinated silicone oils, polyethylene glycols, alkyl-terminal polyethylene glycols (*e.g.,* C₁-C₄ terminal alkyl groups like tetraethylene glycol dimethyl ether (TDG)), paraffins, liquid petroleum jelly, vison oils, turtle oils, soya bean oils, perhydrosqualene, sweet almond oils, calophyllum oils, palm oils, parleam oils, grapeseed oils, sesame oils, maize oils, rapeseed oils, sunflower oils, cottonseed oils, apricot oils, castor oils, avocado oils, jojoba oils, olive oils, cereal germ oils, esters of lanolic acid, esters of oleic acid, esters of lauric acid, esters of stearic acid, fatty esters, higher fatty acids, fatty alcohols, polysiloxanes modified with fatty acids, polysiloxanes modified with fatty alcohols, polysiloxanes modified with polyoxy alkylenes, the like, and any combination thereof. Examples of silicone oils include, but are not limited to, polydimethylsiloxane, methylphenylpolysiloxane, an alkyl modified polydimethylsiloxane, an alkyl modified methylphenylpolysiloxane, an amino modified polydimethylsiloxane, an amino modified methylphenylpolysiloxane, a fluorine modified polydimethylsiloxane, a fluorine modified methylphenylpolysiloxane, a polyether modified polydimethylsiloxane, a polyether modified methylphenylpolysiloxane, and the like, and any combination thereof. Optionally, the carrier fluid may include more than one phase during melt emulsification.

During melt emulsification, the carrier fluid may be present at about 40 wt. % to about 95 wt. %, or about 75 wt. % to about 95 wt. %, or about 70 wt. % to about 90 wt. %, or about 55 wt. % to about 80 wt. %, or about 50 wt. % to about 75 wt. %, or about 40 wt. % to about 60 wt. %, based on a combined mass of the thermoplastic polymer and carrier fluid.

Suitable nanoparticles for use during melt emulsification may include, oxide nanoparticles, carbon black, polymer nanoparticles, or any combination thereof. Oxide nanoparticles may include metal oxide nanoparticles, non-metal oxide nanoparticles, or mixtures thereof. Examples of suitable oxide nanoparticles include, but are not limited to, silica, titania, zirconia, alumina, iron oxide, copper oxide, tin oxide, boron oxide, cerium oxide, thallium oxide, tungsten oxide, the like, and any combination thereof. Mixed metal oxides and/or non-metal oxides, like aluminosilicates, borosilicates, and aluminoborosilicates, are also included within the term metal oxide. Suitable oxide nanoparticles may by hydrophilic or hydrophobic, which may be native to the nanoparticle surface or a result of surface treatment conducted upon the nanoparticles. For example, silica nanoparticles having a hydrophobic surface treatment, like dimethylsilyl, trimethylsilyl, and the like, may be used in the present disclosure. Unfunctionalized oxide nanoparticles may also be suitable for use as well.

Silica nanoparticles, particularly fumed silica nanoparticles with a hydrophobic functionalization thereon, may be especially suitable for use in the disclosure herein, since a variety of functionalized silicas are available, with the type of hydrophobic functionalization and the particle size being varied. Hydrophilic fumed silica nanoparticles may also be suitably used in the disclosure herein. Silazane and silane hydrophobic functionalizations are among the hydrophobic functionalizations that may be used in the present disclosure. As such, the plurality of nanoparticles used in the disclosure herein may comprise or consist essentially of silica nanoparticles, particularly silica nanoparticles that are hydrophobically modified or hydrophilically modified.

Particular silica nanoparticles suitable for use in the disclosure herein may be hydrophobically modified. Hydrophobic functionalization may improve dispersion of the silica nanoparticles in a melt emulsification carrier fluid, which may also be highly hydrophobic. The hydrophobic functionalization may be non-covalently or covalently attached to a surface of the silica nanoparticles. Covalent attachment may take place, for example, through functionalization of surface hydroxyl groups of the silica nanoparticles. In non-limiting examples, silica nanoparticles may be treated with dichlorodimethylsilane or hexamethyldisilazane to afford covalent attachment of a hydrophobic modification. Commercially available hydrophobically functionalized silica nanoparticles include, for example, AEROSII, RX50 (Evonik, average particle size = 40 nm, 25-45 m²/g BET surface area), AEROSII, R812S (Evonik, average particle size = 7 nm, 195-245 m²/g BET surface area), and AEROSII, R972 (Evonik, average particle size = 16 nm, 90-130 m²/g BET surface area).

Polymer nanoparticles are another type of nanoparticle that may be suitably used in the disclosure herein. Suitable polymer nanoparticles may include one or more polymers that are thermosetting and/or crosslinked, such that they do not melt when processed by melt emulsification according to the disclosure herein. Nanoparticles comprising a high molecular weight thermoplastic polymer having a high melting or decomposition point may similarly be suitable for use in the disclosure herein.

Suitable nanoparticles may have an average diameter (D₅₀) of about 1 nm to about 500 nm, or about 10 nm to about 150 nm, or about 25 nm to about 100 nm, or about 100 nm to about 250 nm, or about 250 nm to about 500 nm.

Suitable nanoparticles may have a BET surface area of about 10 m²/g to about 500 m²/g, or about 10 m²/g to about 150 m²/g, or about 25 m²/g to about 100 m²/g, or about 100 m²/g to about 250 m²/g, or about 250 m²/g to about 500 m²/g.

During melt emulsification, the nanoparticles may be present in the carrier fluid at a concentration of about 0.01 wt. % to about 10 wt. %, or about 0.01 wt. % to about 1 wt. %, or about 0.1 wt. % to about 3 wt. %, or about 1 wt. % to about 5 wt. %, or about 5 wt. % to about 10 wt. %, based on the mass of the thermoplastic polymer.

Based on turbidity measurements, about 80-90% of the available nanoparticles, such as silica nanoparticles, become associated upon the outer surface of the thermoplastic polymer particulates. Since the loading of nanoparticles is measured relative to the thermoplastic polymer, the amount of nanoparticles associated with the thermoplastic polymer particulates may be about 80-90% of the nanoparticle loading used when forming the thermoplastic polymer particulates during melt emulsification. As such, for an nanoparticle loading of 0.25 wt. % during melt emulsification, the corresponding amount of nanoparticles associated with the thermoplastic polymer particulates may be about 0.2 wt. % to about 0.225 wt. %, and for an nanoparticle loading of 1.0 wt. %, the corresponding amount of nanoparticles associated with the thermoplastic polymer particulates may be about 0.8 wt. % to about 0.9 wt. %. Higher or lower amounts of nanoparticles associated with the thermoplastic polymer particulates may be realized for higher or lower nanoparticle loadings in the carrier fluid.

Mixing apparatuses suitable for conducting melt emulsification according to the disclosure herein may be selected to maintain the melt emulsion at a temperature greater than or equal to the melting point or softening temperature of the thermoplastic polymer while maintaining a shear rate sufficient to disperse the resulting thermoplastic polymer melt in the carrier fluid as liquefied droplets. Examples of suitable mixing apparatuses may include, but are not limited to, extruders (*e*.*g*., continuous extruders, batch extruders, and the like), stirred reactors, blenders, reactors with inline homogenizer systems, the like, and apparatuses derived therefrom. Advantageously, the emulsion extrusion processes described herein can be operated continuously, which provides a potentially scalable method for industrial-level production of highly spherical thermoplastic polymer particulates having a desired particle size distribution.

The temperature at which melt emulsification is conducted is greater than or equal to the melting point or softening temperature of the thermoplastic polymer and less than or equal to the decomposition temperature of any components used therein. For example, melt emulsification may be conducted at a temperature of about 1°C to about 50°C, or about 1°C to about 25°C, or about 5°C to about 30°C, or about 20°C to about 50°C greater than the melting point or softening temperature of the thermoplastic polymer to form the melt emulsion.

The shear rate at which melt emulsification is conducted may be sufficiently high to disperse the polymer melt in the carrier fluid as liquefied droplets of a specified size. The liquefied droplets may have a diameter of about 1000 µm or less, such as about 1 µm to about 1000 µm, or about 1 µm to about 50 µm, or about 10 µm to about 100 µm, or about 10 µm to about 250 µm, or about 50 µm to about 500 µm, or about 250 µm to about 750 µm, or about 500 µm to about 1000 µm.

The time over which melt emulsification is conducted (specifically the heating and shear rate operations of melt emulsification) may range from about 10 seconds to about 18 hours or longer, such as about 10 seconds to about 30 minutes, or about 5 minutes to about 1 hour, or about 15 minutes to about 2 hours, or about 1 hour to about 6 hours, or about 3 hours to about 18 hours. Without being limited by theory, it is believed that a steady state of droplet sizes will be reached, at which point further changes in heating and shear may cease. The time at which a steady state is reached may depend on, among other things, the temperature, the shear rate, the thermoplastic polymer, the carrier fluid, the nanoparticles, and combinations thereof. Afterward, the melt emulsification mixture may be cooled, with or without continued shear.

During cooling to initially obtain the thermoplastic polymer particulates, cooling conditions may range from slow (*e*.*g*., allowing the melt emulsion to cool under ambient conditions) to fast (*e*.*g*., quenching). For example, the rate of cooling may range from about 10°C/hour to about 100°C/second to almost instantaneous with quenching (*e*.*g*., dry ice quenching), such as about 10°C/hour to about 60°C/hour, or about 0.5°C/minute to about 20°C/minute, or about 1°C/minute to about 5°C/minute, or about 10°C/minute to about 60°C/minute, or about 0.5°C/second to about 10°C/second, or about 10°C/second to about 100°C/second. During cooling, little to no shear may be applied to the melt emulsion. Alternately, in some instances, the shear rate applied during heating may be applied during cooling, or an even more rapid shear rate may be used.

After cooling takes place, the resulting cooled mixture may undergo treatment to isolate the thermoplastic polymer particulates from the carrier fluid. Suitable treatments include, but are not limited to, washing, filtering, centrifuging, decanting, the like, and any combination thereof.

Solvents used for washing the thermoplastic polymer particulates are chosen to be at least miscible with the carrier fluid and (b) nonreactive (*e*.*g*., non-swelling and non-dissolving) with the thermoplastic polymer particulates. The choice of solvent may depend on, among other things, the composition of the carrier fluid and the composition of the thermoplastic polymer. Examples of suitable solvents include, but are not limited to, hydrocarbon solvents (*e*.*g*., pentane, hexane, heptane, octane, cyclohexane, cyclopentane, decane, dodecane, tridecane, and tetradecane), aromatic hydrocarbon solvents (*e*.*g*., benzene, toluene, xylene, 2-methylnaphthalene, and cresol), ether solvents (*e*.*g*., diethyl ether, tetrahydrofuran, diisopropyl ether, and dioxane), ketone solvents (*e*.*g*., acetone and methyl ethyl ketone), alcohol solvents (*e*.*g*., methanol, ethanol, isopropanol, and n-propanol), ester solvents (*e*.*g*., ethyl acetate, methyl acetate, butyl acetate, butyl propionate, and butyl butyrate), halogenated solvents (*e*.*g*., chloroform, bromoform, 1,2-dichloromethane, 1,2-dichloroethane, carbon tetrachloride, chlorobenzene, and hexafluoroisopropanol), water, the like, and any combination thereof.

Once treated with a solvent, the thermoplastic polymer particulates may be separated from the carrier fluid and solvent by filtration, decantation, centrifugation, or the like. Multiple solvent washings may be conducted to remove the carrier fluid, if desired. Residual solvent may then be removed from the thermoplastic polymer particulates using an appropriate method such as air-drying, heat-drying, reduced pressure drying, freeze drying, or a hybrid thereof. Heating, if performed, may be conducted at a temperature lower than the glass transition point of the thermoplastic polymer (*e*.*g*., about 50°C to about 150°C).

Optionally, the thermoplastic polymer particulates may be further processed to produce purified thermoplastic polymer particulates. For example, the thermoplastic polymer particulates may be further classified by passage through a sieve of a desired size, such as a sieve having a pore size of about 10 µm to about 250 µm, or about 10 µm to about 100 µm, or about 50 µm to about 200 µm, or about 150 µm to about 250 µm.

In another example, at least a portion of the nanoparticles may be removed from the surface of the thermoplastic polymer particulates through an appropriate chemical treatment. For example, silica nanoparticles may be at least partially removed by washing the thermoplastic polymer particulates with an aqueous base.

Thermoplastic polymer particulates produced in accordance with the disclosure above may comprise the thermoplastic polymer in an amount ranging from about 90 wt. % to about 99.5 wt. %, or about 90 wt. % to about 95 wt. %, or about 92 wt. % to about 97 wt. %, or about 95 wt. % to about 99.5 wt. %, based on a total mass of the thermoplastic polymer particulates. Nanoparticles present upon the outer surface of the thermoplastic polymer particulates (and optionally at least partially embedded in the outer surface) may be present at about 10 wt. % or less, such as about 0.01 wt. % to about 10 wt. %, or about 0.01 wt. % to about 1 wt. %, or about 0.5 wt. % to about 5 wt. %, or about 3 wt. % to about 7 wt. %, or about 5 wt. % to about 10 wt. %, based on a total mass of the thermoplastic polymer particulates. Colorants or other additives may be present within the thermoplastic polymer particulates at about 10 wt. % or less or about 5 wt. % or less, such as about 0.01 wt. % to about 10 wt. %, or about 0.01 wt. % to about 1 wt. %, or about 0.5 wt. % to about 5 wt. %, or about 3 wt. % to about 7 wt. %, or about 5 wt. % to about 10 wt. %, based on a total mass of the thermoplastic polymer particulates.

The nanoparticles may be disposed as a coating upon the outer surface of the thermoplastic polymer particulates. The coating may be disposed substantially uniformly upon the outer surface. With respect to a coating, the term "substantially uniform" refers to even coating thickness in surface locations covered by the coating. Whether uniform or non-uniform the coating may be complete or incomplete. Thus, the nanoparticles may define a coating that covers at least about 5% of the surface of the thermoplastic polymer particulates, such as about 5% to about 100%, or about 5% to about 25%, or about 20% to about 50%, or about 40% to about 70%, or about 50% to about 80%, or about 60% to about 90%, or about 70% to about 100% of the surface area of the thermoplastic polymer particulates. The coverage of the nanoparticles on an outer surface of the thermoplastic polymer particulates may be determined using image analysis of the SEM micrographs or another suitable imaging technique, for example.

The thermoplastic polymer particulates produced in accordance with the disclosure above may have a D₁₀ of about 0.1 µm to about 125 µm, or about 0.1 µm to about 5 µm, or about 1 µm to about 10 µm, or about 5 µm to about 30 µm, or about 1 µm to about 25 µm, or about 25 µm to about 75 µm, or about 50 µm to about 85 µm, or about 75 µm to about 125 µm; a D₅₀ of about 0.5 µm to about 200 µm, or about 0.5 µm to about 10 µm, or about 5 µm to about 50 µm, or about 30 µm to about 100 µm, or about 30 µm to about 70 µm, or about 25 µm to about 50 µm, or about 50 µm to about 100 µm, or about 75 µm to about 150 µm, or about 100 µm to about 200 µm; and a D₉₀ of about 3 µm to about 300 µm, or about 3 µm to about 15 µm, or about 10 µm to about 50 µm, or about 25 µm to about 75 µm, or about 70 µm to about 200 µm, or about 60 µm to about 150 µm, or about 150 µm to about 300 µm, wherein D₁₀<D₅₀<D₉₀. The thermoplastic polymer particulates may also have a diameter span of about 0.2 to about 10, or about 0.2 to about 0.5, or about 0.4 to about 0.8, or about 0.5 to about 1.0, or about 1 to about 3, or about 2 to about 5, or about 5 to about 10.

The thermoplastic polymer particulates may have a circularity of about 0.7 or greater, or about 0.7 to about 0.95, or about 0.9 to about 1.0, or about 0.93 to about 0.99, or about 0.95 to about 0.99, or about 0.97 to about 0.99, or about 0.98 to 1.0.

The thermoplastic polymer particulates may have an angle of repose of about 20° to about 45°, or about 25° to about 35°, or about 30° to about 40°, or about 35° to about 45°.

The thermoplastic polymer particulates may have a Hausner ratio of about 1.0 to about 1.5, or about 1.0 to about 1.2, or about 1.1 to about 1.3, or about 1.2 to about 1.35, or about 1.3 to about 1.5.

The thermoplastic polymer particulates may have a bulk density of about 0.3 g/cm³ to about 0.8 g/cm³, or about 0.3 g/cm³ to about 0.6 g/cm³, or about 0.4 g/cm³ to about 0.7 g/cm³, or about 0.5 g/cm³ to about 0.6 g/cm³, or about 0.5 g/cm³ to about 0.8 g/cm³.

The thermoplastic polymer particulates may have a tapped density of about 0.3 g/cm³ to about 0.8 g/cm³, or about 0.3 g/cm³ to about 0.5 g/cm³, or about 0.5 g/cm³ to about 0.8 g/cm³, or about 0.8 g/cm³ to about 1.2 g/cm³, or about 0.3 g/cm³ to about 1.2 g/cm³.

As mentioned above, thermoplastic polymer particulates produced by melt emulsification can be colorless (*i.e.,* be the native color of the thermoplastic polymer) or have a color defined by a colorant present therein. According to the present disclosure, colored particulate blends may be produced by combining a first plurality of thermoplastic polymer particulates having a first color and a second plurality of thermoplastic polymer particulates having a second color. The first color and the second color differ from one another, and optionally one of the first color or the second color may represent a colorless state (*i.e.,* be the native color of the thermoplastic polymer in the thermoplastic polymer particulates). The first plurality of thermoplastic polymer particulates and the second plurality of thermoplastic polymer particulates may remain printable by additive manufacturing once combined together, be visually homogeneous in appearance, and appear as a single color different than the first color and the second color.

Accordingly, the present disclosure provides colored particulate blends comprising: a first plurality of thermoplastic polymer particulates having a first color and comprising a first thermoplastic polymer, and a second plurality of thermoplastic polymer particulates having a second color different than the first color and comprising a second thermoplastic polymer. The colored particulate blend is printable by additive manufacturing, is visually homogeneous in appearance, and appears as a single color different than the first color and the second color.

More specifically, the present disclosure provides colored particulate blends comprising: a first plurality of thermoplastic polymer particulates comprising a first thermoplastic polymer and a first colorant blended with the first thermoplastic polymer in an interior of the thermoplastic polymer particulates, in which the first plurality of thermoplastic polymer particulates has a first color; and a second plurality of thermoplastic polymer particulates comprising a second thermoplastic polymer and, optionally, a second colorant blended with the second thermoplastic polymer in an interior of the thermoplastic polymer particulates, in which the second plurality of thermoplastic polymer particulates has a second color different than the first color (if the second colorant is not present, the second plurality of thermoplastic particles may have the color of the thermoplastic polymer therein). The second colorant, if present, is different than the first colorant. The colored particulate blend is printable by additive manufacturing, is visually homogenous in appearance, and appears as a single color different than the first color and the second color. In some embodiments, the second colorant is present, and the second plurality of thermoplastic polymer particulate has a distinctly different color than the first plurality of thermoplastic polymer particulates.

As used herein, the term "visually homogenous in appearance" means that the colored particulate blend appears to be of a single color (*e.g.,* a shade of red, a shade of blue, a shade of yellow, etc.) when observed normally with the human eye without further magnification. That is, the first plurality of thermoplastic polymer particulates and the second plurality of thermoplastic polymer particulates are sufficiently blended to the extent that there does not appear to be remaining domains within the colored particulate blend associated with either of the individual colors, at least to the naked eye. Rather, the colored particulate blend has a visual appearance that is consistent with substantially uniform mixing of the individual colors. It is to be appreciated, however, that magnified observation with the human eye and/or observation using an appropriate instrumental technique, may distinguish individual thermoplastic polymer particulates from the first plurality of thermoplastic polymer particulates and/or the second plurality of thermoplastic polymer particulates as their original color (or show the first and second pluralities of thermoplastic polymer particulates to have different sizes and/or shapes). Thus, the blended color resulting from combining the first plurality of thermoplastic polymer particulates with the second plurality of thermoplastic polymer particulates is believed to result from physical intermixing of particulates rather than a chemical reaction of either of the colorants.

Optionally, the second colorant is not present. When the second colorant is not present, the second plurality of thermoplastic polymer particulates is typically white or colorless. In this case, the single color produced by blending the first plurality of thermoplastic polymer particulates with the second plurality of thermoplastic polymer particulates may be a lightened shade of the first plurality of thermoplastic polymer particulates. That is, the single color may be a lightened variant (shade) of the first color. Thus, for example, in the case of the first plurality of thermoplastic polymer particulates being red, the colored particulate blend obtained in the absence of a second colorant may range in color from pink to a lighter red than that of the first plurality of thermoplastic polymer particulates.

In some embodiments, at least one of the first colorant and the second colorant may convey a color to the thermoplastic polymer particulates that is a primary color (red, blue, or yellow). That is, at least the first color may be a primary color. Since primary colors may be blended to produce any other color, when the first colorant and the second colorant are primary colors, the resulting particulate blends may take on any other color (optionally with blending with a third colorant that is also a primary color), which may then be expressed within at least a portion of a printed object. The third colorant may be present in either of the first plurality of thermoplastic polymer particulates or the second plurality of thermoplastic polymer particulates. Alternately, a third plurality of thermoplastic polymer particulates containing the third colorant may be combined with the first plurality of thermoplastic polymer particulates and the second plurality of thermoplastic polymer particulates.

A third plurality of thermoplastic polymer particulates may also be used when the second plurality of thermoplastic polymer particulates is uncolored (*i*.*e*., the second colorant is not present). The third plurality of thermoplastic polymer particulates may have a third color different than the first color and the second color. The third plurality of thermoplastic polymer particulates may comprise a third colorant blended with the third thermoplastic polymer in an interior of the thermoplastic polymer particulates within the third plurality of thermoplastic polymer particulates, wherein the third color is different than the first color and the second color. In this case, the single color resulting from combining the third plurality of thermoplastic polymer particulates is not a lightened variant of the first color. That is, the single color resulting from combining the first, second, and third pluralities of thermoplastic polymer particulates arises from the first and third colorants, and the shade of the single color may be modified by the amount of uncolored thermoplastic polymer particulates (second plurality of thermoplastic polymer particulates) that are present.

Alternately, when the first plurality of thermoplastic polymer particulates and the second plurality of thermoplastic polymer particulates comprise first and second colorants that are primary colors, and the single color is a secondary color (*i.e.,* orange, green, or purple), a third plurality of thermoplastic polymer particulates lacking a colorant may be introduced into the colored particulate blend to lighten the shade of the single color.

Suitable thermoplastic polymer particulates to include in the first plurality of thermoplastic polymer particulates and the second plurality of thermoplastic polymer particulates (and optionally a third plurality of thermoplastic polymer particulates) are not believed to be especially limited. Particular examples of suitable thermoplastic polymers are provided above. Preferably, the first plurality of thermoplastic polymer particulates and the second plurality of thermoplastic polymer particulates (and optionally a third plurality of thermoplastic polymer particulates) contain the same thermoplastic polymer. That is, at least the first thermoplastic polymer and the second thermoplastic polymer are the same.

To promote good powder flow performance and printability, the first plurality of thermoplastic polymer particulates and the second plurality of thermoplastic polymer particulates within the colored particulate blends may have at least one of the following properties: a circularity differing by about 10% or less or about 25% or less, a Hausner ratio differing by about 10% or less or about 25% or less, and an angle of repose differing by about 10% or less or about 25% or less. In more specific examples, the first plurality of thermoplastic polymer particulates and the second plurality of thermoplastic polymer particulates may have at least one of the following properties: a circularity within a range of about 0.9 to about 1.0, a Hausner ratio within a range of about 1.0 to about 1.5, and an angle of repose within a range of about 20° to about 45°.

Powder flow performance may also be influenced by the particle size distribution. As such, the first plurality of thermoplastic polymer particulates and the second plurality of thermoplastic polymer particulates may have an average diameter differing by about 10% or less, or about 25% or less, or about 50% or less, or about 75% or less, such as a deviation of about 1% to about 10%, or about 10% to about 25%, or about 25% to about 50%, or about 50% to about 75%. Even when the first and second pluralities of thermoplastic polymer particulates differ significantly in size, their powder flow properties may still be similar through adjustment of the angle of repose and Hausner ratio values. Adjustment of the angle of repose and Hausner ratio values may take place during a melt emulsification process (*e*.*g*., by adjusting the amount of oxide nanoparticles used therein as an emulsion stabilizer) and/or through dry blending a flow aid with the thermoplastic polymer particulates following production thereof. In more specific examples, the first plurality of thermoplastic polymer particulates and the second plurality of thermoplastic polymer particulates may have an average diameter ranging from about 10 µm or 20 µm to about 120 µm, preferably with a diameter span ranging from about 0.2 to about 10, or about 0.2 to about 2, or about 0.5 to about 1.1. Other suitable average particle sizes (average diameters) are provided above for thermoplastic polymer particulates.

Any one or more of the foregoing properties promoting good powder flow performance and printability may be present in combination with one another. More specifically, colored particulate blends of the present disclosure may be characterized by one or more of the following: a circularity differing by about 25% or less, a Hausner ratio differing by about 25% or less, an angle of repose differing by about 25% or less, a circularity within a range of about 0.9 to about 1.0, a Hausner ratio within a range of about 1.0 to about 1.5, an angle of repose within a range of about 20° to about 45°, an average diameter differing by about 10% or less, or an average diameter ranging from about 10 µm to about 120 µm and a diameter span ranging from about 0.2 to about 2. Two, three, for, or even more of the foregoing properties may be present in combination with one another.

One or more of the foregoing may be realized by including a plurality of nanoparticles located upon an outer surface of at least a portion of the thermoplastic polymer particulates. Namely, a first plurality of nanoparticles may be located upon an outer surface of at least a portion of the thermoplastic polymer particulates within the first plurality of thermoplastic polymer particulates, and a second plurality of nanoparticles may be located upon an outer surface of at least a portion of the thermoplastic polymer particulates within the second plurality of thermoplastic polymer particulates. Suitable nanoparticles within the first plurality of nanoparticles and the second plurality of nanoparticles may include oxide nanoparticles, carbon black, polymer nanoparticles, the like, or any combination thereof, as discussed in more detail above. The first plurality of nanoparticles and the second plurality of nanoparticles may be the same or different. Likewise, the amount of nanoparticles upon the first plurality of thermoplastic polymer particulates and the amount of nanoparticles upon the second plurality of thermoplastic polymer particulates may be the same or different. Suitable nanoparticles may be introduced onto the thermoplastic polymer particulates during melt emulsification, as discussed above.

The first plurality of thermoplastic polymer particulates and the second plurality of thermoplastic polymer particulates may be combined with one another in any ratio to produce a desired single (blended) color (which may be a lightened shade/variant of the first color in some cases). In non-limiting examples, a mass ratio of the first plurality of thermoplastic polymer particulates to the second plurality of thermoplastic polymer particulates may range from about 1:99 to about 99:1, depending on the blended color to be produced. Optionally, a third plurality of thermoplastic polymer particulates may be combined with the first plurality of thermoplastic polymer particulates and the second plurality of thermoplastic polymer particulates to alter the single color still further.

The colored particulate blends described herein may be formed by providing the first plurality of thermoplastic polymer particulates and the second plurality of thermoplastic polymer particulates, preferably obtained through an appropriate melt emulsification technique, and then combining the first plurality of thermoplastic polymer particulates with the second plurality of thermoplastic polymer particulates to obtain the colored particulate blend. Combining may take place by a dry blending process. More specifically, combining the first plurality of thermoplastic polymer particulates with the second plurality of thermoplastic polymer particulates may comprise one or more mechanical blending processes such as tumbling, stirring, aerosolizing, agitating with an impeller (*e.g.,* in a blender), or the like.

As indicated above, the first plurality of thermoplastic polymer particulates and the second plurality of thermoplastic polymer particulates may be obtained by melt emulsification, preferably in the presence of a plurality of nanoparticles to serve as an emulsion stabilizer, optionally further in the presence of a surfactant, thereby introducing the nanoparticles upon the outer surface of the thermoplastic polymer particulates. Preferably, the first colorant and the second colorant (if present) may be introduced to the first and second thermoplastic polymers, respectively, prior to introducing the first and second thermoplastic polymers to the carrier fluid in which melt emulsification is conducted. In some embodiments, the first colorant and the second colorant (if present) may be introduced to the first and second thermoplastic polymers, respectively, by forming a polymer melt of each thermoplastic polymer and melt blending the colorant into the corresponding polymer melt. The polymer melt may then be solidified and provided to the melt emulsification conditions. In other embodiments, a concentrated masterbatch of colorant in a thermoplastic polymer may be formed or sourced, and the masterbatch may then be melt blended with a thermoplastic polymer lacking a colorant. After solidifying the resulting colored polymer melt, the colored thermoplastic polymer may be provided to the melt emulsification conditions. In still other embodiments, a concentrated masterbatch of colorant in a thermoplastic polymer may be formed or sourced, and the masterbatch may then be dry blended with a thermoplastic polymer lacking a colorant. The dry blend may be directly introduced to the melt emulsification conditions after sufficient blending. As still another option, a colorant may be introduced to the melt emulsification conditions directly, rather than being introduced in combination with the thermoplastic polymer. Direct introduction of a colorant to the melt emulsification conditions may be accomplished using a pump for a liquid colorant or a powder feeder for a solid colorant, for example.

Accordingly, methods of the present disclosure may comprise providing a first plurality of thermoplastic polymer particulates as described herein and a second plurality of thermoplastic polymer particulates as described herein, and combining the first plurality of thermoplastic polymer particulates with the second plurality of thermoplastic polymer particulates to obtain a colored particulate blend that is visually homogeneous in appearance and appears as a single color that is different than the first color and the second color (*i.e.,* has a different color than the first plurality of thermoplastic polymer particulates and the second plurality of thermoplastic polymer particulates). The colored particulate blend may be printable by additive manufacturing.

The colored particulate blends described herein may be utilized in additive manufacturing processes, particularly those employing selective laser sintering to promote particulate consolidation. The colored particulate blends of the present disclosure may exhibit advantageous properties over thermoplastic polymer particulates having irregular shapes and/or wide particle size distributions, such as those available commercially. In non-limiting examples, the colored particulate blends of the present disclosure may undergo consolidation by selective laser sintering in an additive manufacturing process to produce a printed object having coloration at one or more locations. Advantageously, the colored particulate blends may undergo consolidation at relatively low laser powers and afford a low extent of void formation in a printed object. The coloration may extend into the interior of the printed object, as opposed to being present as a surface coating applied upon the completion of printing.

Additive manufacturing processes of the present disclosure may comprise: forming a powder bed comprising a plurality of thermoplastic polymer particulates, wherein at least a portion of the powder bed comprises a colored particulate blend of the present disclosure; and heating at least a portion of the thermoplastic polymer particulates in the powder bed to promote consolidation thereof and form a printed object, wherein at least a portion of the printed object exhibits coloration associated with the colored particulate blend (*i*.*e*., the blended color). The blended color in the printed object may be substantially uniform in appearance in particularly desirable examples. Heating of the thermoplastic polymer particulates in the powder bed may take place in printing system employing a laser, such that heating and consolidation take place by selective laser sintering. The powder bed may be built up sequentially with the thermoplastic polymer particulates being deposited and consolidated layer-by-layer in the course of forming the printed object. As such, the colored particulate blend may be deposited within the powder bed at positions and depths where needed to introduce coloration to the printed object. That is, the colored particulate blend need not necessarily be present throughout the entirety of the powder bed.

When used in additive manufacturing processes, the colored particulate blends may be pre-mixed to form the single color prior to introduction to a printing system, or the colored particulate blends may be formed in-line within the printing system being used to form a printed object having a specified coloration pattern containing the single (blended) color. In either case, a wide palette of blended colors may be produced, thereby alleviating both the inventory management issues and process line complexity associated with post-printing introduction of color and/or when stockpiling a wide range of color blends for printing.

Examples of objects that may be printed using the colored particulate blends of the present disclosure include, but are not limited to, containers (*e*.*g*., for food, beverages, cosmetics, personal care compositions, medicine, and the like), shoe soles, toys, furniture parts and decorative home goods, plastic gears, screws, nuts, bolts, cable ties, automotive parts, medical items, prosthetics, orthopedic implants, aerospace/aircraft-related parts, production of artifacts that aid learning in education, 3D anatomy models to aid in surgeries, robotics, biomedical devices (orthotics), home appliances, dentistry, electronics, sporting goods, and the like. Other applications for the colored particulate blends of the present disclosure may include, but are not limited to, use as a filler in paints and powder coatings, inkjet materials and electrophotographic toners, and the like.

Embodiments disclosed herein include:
A. Colored particulate blends. The colored particulate blends comprise: a first plurality of thermoplastic polymer particulates having a first color and comprising a first thermoplastic polymer; and a second plurality of thermoplastic polymer particulates having a second color different than the first color and comprising a second thermoplastic polymer; wherein the colored particulate blend is printable by additive manufacturing, is visually homogeneous in appearance, and appears as a single color different than the first color and the second color.
A1. Colored particulate blends. The colored particulate blends comprise: a first plurality of thermoplastic polymer particulates comprising a first thermoplastic polymer and a first colorant blended with the first thermoplastic polymer in an interior of the thermoplastic polymer particulates, the first plurality of thermoplastic polymer particulates having a first color; and a second plurality of thermoplastic polymer particulates comprising a second thermoplastic polymer and, optionally, a second colorant blended with the second thermoplastic polymer in an interior of the thermoplastic polymer particulates, the second plurality of thermoplastic polymer particulates having a second color different than the first color; wherein the second colorant, if present, is different than the first colorant; and wherein the colored particulate blend is printable by additive manufacturing, is visually homogeneous in appearance, and has a single color different than the first color and the second color.
B. Methods for forming colored particulate blends. The methods comprise: providing a first plurality of thermoplastic polymer particulates having a first color and comprising a first thermoplastic polymer; providing a second plurality of thermoplastic polymer particulates having a second color different than the first color and comprising a second thermoplastic polymer; wherein the first plurality of thermoplastic polymer particulates and the second plurality of thermoplastic polymer particulates are each produced separately by melt emulsification and/or the first plurality of thermoplastic polymer particulates and the second plurality of thermoplastic polymer particulates have at least one of the following properties: a circularity differing by about 25% or less, a Hausner ratio differing by about 25% or less, an angle of repose differing by about 25% or less, a circularity within a range of about 0.9 to about 1.0, a Hausner ratio within a range of about 1.0 to about 1.5, an angle of repose within a range of about 20° to about 45°, an average diameter differing by about 10% or less, or an average diameter ranging from about 10 µm to about 120 µm and a diameter span ranging from about 0.2 to about 2; and combining the first plurality of thermoplastic polymer particulates with the second plurality of thermoplastic polymer particulates to obtain a colored particulate blend that is visually homogeneous in appearance, and appears as a single color different than the first color and the second color. The colored particulate blend may be printable by additive manufacturing.
B1. Methods for forming colored particulate blends. The methods comprise: providing a first plurality of thermoplastic polymer particulates comprising a first thermoplastic polymer and a first colorant blended with the first thermoplastic polymer in an interior of the thermoplastic polymer particulates, the first plurality of thermoplastic polymer particulates having a first color; providing a second plurality of thermoplastic polymer particulates comprising a second thermoplastic polymer and, optionally, a second colorant blended with the second thermoplastic polymer in an interior of the thermoplastic polymer particulates, the second plurality of thermoplastic polymer particulates having a second color; wherein the second colorant, if present, is different than the first colorant; and combining the first plurality of thermoplastic polymer particulates with the second plurality of thermoplastic polymer particulates to obtain a colored particulate blend that is visually homogeneous in appearance and has a single color different than the first color and the second color. The colored particulate blend may be printable by additive manufacturing.

Embodiments A, A1, B, and B1 may have one or more of the following elements present in any combination.
Element 1: wherein the second colorant is not present.
Element 2: wherein the third color is a lightened variant of the first color.
Element 3: wherein the colored particulate blend further comprises a third plurality of thermoplastic polymer particulates having a third color and comprising a third thermoplastic polymer; wherein the third color is different than the first color and the second color, and the single color is not a lightened variant of the first color.
Element 3A: wherein the third plurality of thermoplastic polymer particulates comprises a third colorant blended with the third thermoplastic polymer in an interior of the thermoplastic polymer particulates within the third plurality of thermoplastic polymer particulates.
Element 3B: wherein the colored particulate blend comprises a third plurality of thermoplastic polymer particulates comprising a third thermoplastic polymer and a third colorant blended with the third thermoplastic polymer in an interior of the thermoplastic polymer particulates, the third plurality of thermoplastic polymer particulates having a third color different than the first color and the second color, and the single color not being a lightened variant of the first color.
Element 4: wherein at least the first color is a primary color.
Element 5: wherein the first thermoplastic polymer and the second thermoplastic polymer are the same.
Element 6: wherein the colored particulate blend further comprises a first plurality of nanoparticles located upon an outer surface of at least a portion of the thermoplastic polymer particulates within the first plurality of thermoplastic polymer particulates, and a second plurality of nanoparticles located upon an outer surface of at least a portion of the thermoplastic polymer particulates within the second plurality of thermoplastic polymer particulates.
Element 6A: wherein the first plurality of thermoplastic polymer particulates further comprises a first plurality of nanoparticles located upon an outer surface of a least a portion of the thermoplastic polymer particulates within the first plurality of thermoplastic polymer particulates, and the second plurality of thermoplastic polymer particulates further comprises a second plurality of nanoparticles located upon an outer surface of at least a portion of the thermoplastic polymer particulates within the second plurality of thermoplastic polymer particulates.
Element 7: wherein the plurality of first nanoparticles and the plurality of second nanoparticles comprise one or more nanoparticles selected from the group consisting of oxide nanoparticles, carbon black, polymer nanoparticles, and any combination thereof.
Element 8: wherein the first plurality of thermoplastic polymer particulates and the second plurality of thermoplastic polymer particulates have at least one of the following properties: a circularity differing by about 25% or less, a Hausner ratio differing by about 25% or less, and an angle of repose differing by about 25% or less.
Element 9: wherein the first plurality of thermoplastic polymer particulates and the second plurality of thermoplastic polymer particulates have at least one of the following properties: a circularity within a range of about 0.9 to about 1.0, a Hausner ratio within a range of about 1.0 to about 1.5, and an angle of repose within a range of about 20° to about 45°.
Element 10: wherein the first plurality of thermoplastic polymer particulates and the second plurality of thermoplastic polymer particulates have an average diameter differing by about 10% or less.
Element 10A: wherein the first plurality of thermoplastic polymer particulates and the second plurality of thermoplastic polymer particulates have an average diameter differing by about 25% or less, or about 50% or less, or about 75% or less.
Element 11: wherein the first plurality of thermoplastic polymer particulates and the second plurality of thermoplastic polymer particulates have an average diameter ranging from about 10 µm to about 120 µm and a diameter span ranging from about 0.2 to about 2.
Element 12: wherein a mass ratio of the first plurality of thermoplastic polymer particulates to the second plurality of thermoplastic polymer particulates ranges from about 1:99 to about 99:1.
Element 13: wherein the first colorant and the second colorant, if present, are introduced to the first and second thermoplastic polymers, respectively, by combining a colored masterbatch thermoplastic polymer with a base thermoplastic polymer lacking a colorant, and performing melt blending of the colored masterbatch thermoplastic polymer and the base thermoplastic polymer lacking the colorant.
Element 13A: wherein the first colorant and the second colorant, if present, are introduced to the first and second thermoplastic polymers, respectively, by combining a colored masterbatch thermoplastic polymer with a base thermoplastic polymer lacking a colorant, and performing melt blending of the colored masterbatch thermoplastic polymer and the base thermoplastic polymer lacking the colorant; wherein the first and second thermoplastic polymers are processed by melt emulsification to produce the first plurality of thermoplastic polymer particulates and the second plurality of thermoplastic polymer particulates, respectively.
Element 14: wherein the first plurality of thermoplastic polymer particulates and the second plurality of thermoplastic polymer particulates are combined *in situ* during an additive manufacturing process.

Non-limiting exemplary combinations applicable to A, A1, B, and B1 include, but are not limited to: 1 and 2; 1 and 3/3A/3B; 1 and 4; 1-3/3A/3B; 1, 2, and 4; 1-4; 1 and 5; 1 and 6/6A; 1, 6/6A, and 7; 1, and 8, 9, 10 or 10A, and/or 11; 1 and 12; 3/3A/3B and 4; 3/3A/3B and 5; 3/3A/3B and 6/6A; 3/3A/3B, 6/6A, and 7; 3/3A/3B, and 8, 9, 10 or 10A, and/or 11; 3/3A/3B and 12; 4 and 5; 4 and 6/6A; 4, 6/6A, and 7; 4, and 8, 9, 10 or 10A, and/or 11; 4 and 12; 5 and 6/6A; 5, 6/6A, and 7; 5, and 8, 9, 10 or 10A, and/or 11; 5 and 12; 6/6A and 7; 6/6A, and 8, 9, 10 or 10A, and/or 11, and 6/6A and 12. Any of 1-12 may be in further combination with 13, 13A, or 14, or any of the foregoing combinations may be in further combination with 13/13A or 14.

The present disclosure is also directed to the following non-limiting clauses:
Clause 1. A colored particulate blend comprising:
   a first plurality of thermoplastic polymer particulates having a first color and comprising a first thermoplastic polymer; and
   a second plurality of thermoplastic polymer particulates having a second color different than the first color and comprising a second thermoplastic polymer;
      wherein the colored particulate blend is printable by additive manufacturing, is visually homogeneous in appearance, and appears as a single color different than the first color and the second color.
Clause 2: The colored particulate blend of clause 1, wherein the first plurality of thermoplastic polymer particulates comprises a first colorant blended with the first thermoplastic polymer in an interior of the thermoplastic polymer particulates within the first plurality of thermoplastic polymer particulates, and the second plurality of thermoplastic polymer particulates optionally comprises a second colorant different than the first colorant blended with the second thermoplastic polymer in an interior of the thermoplastic polymer particulates within the second plurality of thermoplastic polymer particulates.
Clause 3. The colored particulate blend of clause 2, wherein the second colorant is not present.
Clause 4. The colored particulate blend of clause 3, wherein the single color is a lightened variant of the first color.
Clause 5. The colored particulate blend of clause 1, further comprising:
   a third plurality of thermoplastic polymer particulates having a third color and comprising a third thermoplastic polymer;
   wherein the third color is different than the first color and the second color, and the single color is not a lightened variant of the first color.
Clause 6: The colored particulate blend of clause 5, wherein the third plurality of thermoplastic polymer particulates comprises a third colorant blended with the third thermoplastic polymer in an interior of the thermoplastic polymer particulates within the third plurality of thermoplastic polymer particulates.
Clause 7. The colored particulate blend of any one of clauses 1-6, wherein at least the first color is a primary color.
Clause 8. The colored particulate blend of any one of clauses 1-7, wherein the first thermoplastic polymer and the second thermoplastic polymer are the same.
Clause 9. The colored particulate blend of any one of clauses 1-8, further comprising:
   a first plurality of nanoparticles located upon an outer surface of at least a portion of the thermoplastic polymer particulates within the first plurality of thermoplastic polymer particulates, and a second plurality of nanoparticles located upon an outer surface of at least a portion of the thermoplastic polymer particulates within the second plurality of thermoplastic polymer particulates.
Clause 10. The colored particulate blend of clause 9, wherein the first plurality of nanoparticles and the second plurality of nanoparticles comprise one or more nanoparticles selected from the group consisting of oxide nanoparticles, carbon black, polymer nanoparticles, and any combination thereof.
Clause 11. The colored particulate blend of any one of clauses 1-10, wherein the first plurality of thermoplastic polymer particulates and the second plurality of thermoplastic polymer particulates have at least one of the following properties:
   a circularity differing by about 25% or less,
   a Hausner ratio differing by about 25% or less, and
   an angle of repose differing by about 25% or less.
Clause 11A. The colored particulate blend of any one of clauses 1-11, wherein the first plurality of thermoplastic polymer particulates and the second plurality of thermoplastic polymer particulates have at least one of the following properties:
   a circularity within a range of about 0.9 to about 1.0,
   a Hausner ratio within a range of about 1.0 to about 1.5, and
   an angle of repose within a range of about 20° to about 45°.
Clause 12. The colored particulate blend of any one of clauses 1-11 or 11A, wherein the first plurality of thermoplastic polymer particulates and the second plurality of thermoplastic polymer particulates have an average diameter differing by about 10% or less.
Clause 13. The colored particulate blend of any one of clauses 1-11, 11A or 12, wherein the first plurality of thermoplastic polymer particulates and the second plurality of thermoplastic polymer particulates have an average diameter ranging from about 10 µm to about 120 µm and a diameter span ranging from about 0.2 to about 2.
Clause 14. The colored particulate blend of any one of clauses 1-11, 11A, 12 or 13, wherein a mass ratio of the first plurality of thermoplastic polymer particulates to the second plurality of thermoplastic polymer particulates ranges from about 1:99 to about 99:1.
Clause 15. A method comprising:
   providing a first plurality of thermoplastic polymer particulates having a first color and comprising a first thermoplastic polymer;
   providing a second plurality of thermoplastic polymer particulates having a second color different than the first color and comprising a second thermoplastic polymer;
      wherein the first plurality of thermoplastic polymer particulates and the second plurality of thermoplastic polymer particulates are each produced separately by melt emulsification; and
   combining the first plurality of thermoplastic polymer particulates with the second plurality of thermoplastic polymer particulates to obtain a colored particulate blend that is visually homogeneous in appearance and appears as a single color different than the first color and the second color.
Clause 16A. The method of clause 16, wherein the colored particulate blend is printable by additive manufacturing.
Clause 16. The method of clause 15, wherein the first plurality of thermoplastic polymer particulates comprises a first colorant blended with the first thermoplastic polymer in an interior of the thermoplastic polymer particulates within the first plurality of thermoplastic polymer particulates, and the second plurality of thermoplastic polymer particulates optionally comprises a second colorant different than the first colorant blended with the second thermoplastic polymer in an interior of the thermoplastic polymer particulates within the second plurality of thermoplastic polymer particulates.
Clause 17: The method of clause 16, wherein the first colorant and the second colorant, if present, are introduced to the first and second thermoplastic polymers, respectively, by combining a colored masterbatch thermoplastic polymer with a base thermoplastic polymer lacking a colorant, and performing melt blending of the colored masterbatch thermoplastic polymer and the base thermoplastic polymer lacking the colorant;
   wherein the melt emulsification is performed after performing the melt blending.
Clause 18: The method of any one of clauses 15-17, wherein the first plurality of thermoplastic polymer particulates further comprises a first plurality of nanoparticles located upon an outer surface of a least a portion of the thermoplastic polymer particulates within the first plurality of thermoplastic polymer particulates, and the second plurality of thermoplastic polymer particulates further comprises a second plurality of nanoparticles located upon an outer surface of at least a portion of the thermoplastic polymer particulates within the second plurality of thermoplastic polymer particulates.
Clause 19. The method of any one of clauses 15-18, wherein the first plurality of thermoplastic polymer particulates and the second plurality of thermoplastic polymer particulates have at least one of the following properties:
   a circularity differing by about 25% or less,
   a Hausner ratio differing by about 25% or less, and
   an angle of repose differing by about 25% or less.
Clause 19A. The method of any one of clauses 15-19, wherein the first plurality of thermoplastic polymer particulates and the second plurality of thermoplastic polymer particulates have at least one of the following properties:
   a circularity within a range of about 0.9 to about 1.0,
   a Hausner ratio within a range of about 1.0 to about 1.5, and
   an angle of repose within a range of about 20° to about 45°.
Clause 19B. The method of any one of clauses 15-19 or 19A, wherein the first plurality of thermoplastic polymer particulates and the second plurality of thermoplastic polymer particulates have an average diameter differing by about 10% or less.
Clause 19C. The method of any one of clauses 15-19, 19A, or 19B, wherein the first plurality of thermoplastic polymer particulates and the second plurality of thermoplastic polymer particulates have an average diameter ranging from about 10 µm to about 120 µm and a diameter span ranging from about 0.2 to about 2.
Clause 20. A method comprising:
   providing a first plurality of thermoplastic polymer particulates having a first color and comprising a first thermoplastic polymer;
   providing a second plurality of thermoplastic polymer particulates having a second color different than the first color and comprising a second thermoplastic polymer;
      wherein the first plurality of thermoplastic polymer particulates and the second plurality of thermoplastic polymer particulates have at least one of the following properties:
      a circularity differing by about 25% or less,
      a Hausner ratio differing by about 25% or less,
      an angle of repose differing by about 25% or less,
      a circularity within a range of about 0.9 to about 1.0,
      a Hausner ratio within a range of about 1.0 to about 1.5,
      an angle of repose within a range of about 20° to about 45°,
      an average diameter differing by about 10% or less, or
      an average diameter ranging from about 10 µm to about 120 µm and a diameter span ranging from about 0.2 to about 2; and
   combining the first plurality of thermoplastic polymer particulates with the second plurality of thermoplastic polymer particulates to obtain a colored particulate blend that is visually homogeneous in appearance and appears as a single color different than the first color and the second color.
Clause 20A: The method of clause 20, wherein the colored particulate blend is printable by additive manufacturing.
Clause 21: A method comprising:
   providing a first plurality of thermoplastic polymer particulates comprising a first thermoplastic polymer and a first colorant blended with the first thermoplastic polymer in an interior of the thermoplastic polymer particulates, the first plurality of thermoplastic polymer particulates having a first color;
   providing a second plurality of thermoplastic polymer particulates comprising a second thermoplastic polymer and, optionally, a second colorant blended with the second thermoplastic polymer in an interior of the thermoplastic polymer particulates, the second plurality of thermoplastic polymer particulates having a second color;
      wherein the second colorant, if present, is different than the first colorant; and
   combining the first plurality of thermoplastic polymer particulates with the second plurality of thermoplastic polymer particulates to obtain a colored particulate blend that is visually homogeneous in appearance and appears as a single color that is different than the first color and the second color.
Clause 21A: The method of clause 21, wherein the colored particulate blend is printable by additive manufacturing.

To facilitate a better understanding of the embodiments of the present disclosure, the following examples of preferred or representative embodiments are given. In no way should the following examples be read to limit, or to define, the scope of the disclosure.

### EXAMPLES

**Example 1: Exemplary Conditions for Extruder Production of Thermoplastic Polyurethane Particulates Lacking a Colorant.** Thermoplastic polyurethane particulates lacking a colorant were produced from ELASTOLLAN 1190A10 thermoplastic polyurethane (a polyether polyurethane elastomer, BASF) using an extruder-based melt emulsification process. In brief, polymer pellets were introduced to a 25 mm twin-screw extruder (Werner & Pfleiderer ZSK-25) and brought to a desired extruder process temperature (see Table 1), and a mixture of polydimethylsiloxane (PDMS, 10,000 cSt viscosity) having fumed silica nanoparticles (AEROSIL^{®} RX50 having a 40 nm average particle size or R812S having a 7 nm average particle size, Evonik) dispersed therein was introduced to the molten polymer in the extruder. The PDMS mixture was pre-heated to the extruder process temperature prior to being combined with the thermoplastic polyurethane. The resulting melt emulsification blend was then extruded, and the resulting thermoplastic polymer particulates were collected in a container and cooled to room temperature over several hours. Other operational parameters and the resulting particle size distributions are also provided in Table 1. Particle sizes were determined after solvent washing with heptane to remove the PDMS.

**Table 1**

| **Example** | **Screw RPM** | **Extruder Temp. (°C)** | **Wt. % TPU^{a}** | **Wt. % silica^{b}** | **Silica Type** | **D₁₀** (**µm**) | **D₅₀** (**µm)** | **D₉₀** (**µm**) |
|---|---|---|---|---|---|---|---|---|
| A | 1100 | 240 | 53 | 1.3 | RX50 | 54.2 | 69.0 | 86.6 |
| B | 900 | 240 | 53 | 1.3 | RX50 | 59.2 | 74.5 | 94.8 |
| C | 1100 | 240 | 53 | 1.3 | RX50 | 57.6 | 75.3 | 97.8 |
| D | 1100 | 240 | 53 | 1.3 | RX50 | 49.5 | 65.1 | 85.0 |
| E | 1100 | 240 | 42 | 2.1 | RX50 | 26.3 | 41.9 | 65.1 |
| F | 1100 | 240 | 42 | 2.1 | RX50 | 28.9 | 42.0 | 60.2 |
| G | 1100 | 240 | 50 | 1.00 | RX50 | 56.5 | 76.3 | 103.0 |
| H | 1100 | 240 | 46 | 1.17 | RX50 | 44.6 | 61.7 | 84.7 |
| I | 1100 | 260 | 46 | 1.17 | RX50 | 38.2 | 46.5 | 56.5 |
| J | 1100 | 260 | 51 | 0.96 | RX50 | 53.5 | 64.0 | 75.7 |
| K | 1100 | 260 | 53 | 0.59 | R812S | 21.3 | 26.1 | 32.3 |
| L | 1100 | 260 | 51 | 0.64 | R812S | 19.5 | 24.0 | 29.7 |
| M | 1100 | 240 | 48 | 0.72 | R812S | 15.2 | 25.0 | 38.8 |
| N | 1100 | 240 | 52 | 0.62 | R812S | 20.8 | 35.1 | 57.5 |
| O | 1100 | 240 | 53 | 0.39 | R812S | 44.3 | 59.8 | 80.5 |
| P | 1100 | 240 | 47 | 0.50 | R812S | 21.0 | 34.8 | 54.8 |
| Q | 1100 | 260 | 54 | 0.37 | R812S | 35.6 | 43.0 | 51.7 |

| | | | | | | | | |
|---|---|---|---|---|---|---|---|---|
| ^{a}value measured relative to combined mass of PDMS and TPU ^{b}value measured relative to TPU | | | | | | | | |

As shown, the processing conditions and the amount of silica nanoparticles used during melt emulsification afforded some degree of control over the particle size distributions that were obtained.

**Example 2: Exemplary Conditions for Batch Production of Thermoplastic Polyurethane Particulates Lacking a Colorant.** To a 500 mL glass reactor, 320 g polydimethylsiloxane (PDMS, 30,000 cSt viscosity) was added along with 0.25 wt. % fumed silica nanoparticles (AEROSIL^{®} RX50 having a 40 nm average particle size). The reactor was set to a stirring rate of 200 rpm using an overhead stirrer, and the temperature was raised to 190°C. Further heating to 200°C was performed, at which point, 80 g thermoplastic polyurethane pellets (ELASTOLLAN^{®} 1190A10) were added to the stirring mixture. Once the thermoplastic polyurethane pellets were fully combined with the PDMS mixture, the stirring rate was increased to 500 rpm, and the temperature was maintained at 200°C for 60 minutes. Thereafter, stirring was discontinued and the resulting slurry was cooled to room temperature. The slurry was washed four times with hexanes, and thermoplastic polyurethane particulates were obtained following vacuum filtration. The average particle size was 95.6 µm and the diameter span was 0.889.

**Example 3: Exemplary Conditions for Extruder Production of Thermoplastic Polyurethane Particulates Containing a Colorant.** Red, green, or blue thermoplastic polyurethane masterbatches were obtained, and small portions of the individual masterbatches were dry blended at a 2% let down ratio with thermoplastic polyurethane lacking a colorant (ELASTOLLAN 1190A10). Let down ratio refers to the percentage of colored masterbatch relative to the total amount of polymer. The resulting colored thermoplastic polyurethane was then fed in pellet form to an extruder under conditions modified slightly from those specified in Example 1. A 27 mm twin screw extruder was used (Leistritz) in this case, with the extruder barrel set to 210°C and the screw speed set to 550 RPM. The colored thermoplastic polyurethane was fed into the extruder at a rate of 10 kg/hr, PDMS (30,000 cSt) alone was fed into the extruder at a rate of 14.55 kg/hr, and PDMS (30,000 cSt) premixed with fumed silica nanoparticles (AEROSIL^{®} RX50, 10 wt. % relative to PDMS mixed with the silica nanoparticles) was fed into the extruder at a rate of 0.05 kg/hr. The addition rates were regulated to provide 0.5 wt. % silica nanoparticles relative to the thermoplastic polyurethane under the melt emulsification conditions.

The melt dispersion obtained from the extruder was cooled on a metal conveyor belt to prevent particle coalescence and then collected into a drum at the end of the belt. The collected slurry was washed four times with heptane, with the first wash having a 1.6:1 heptane to slurry ratio and all subsequent washes having a 1.2:1 heptane to slurry ratio. The particles were separated from the solvent by vacuum filtration after each wash and then dried at 50°C for 48 hours under vacuum after the final wash. The resulting red, green, and blue thermoplastic polyurethane particulates had average particle sizes (D₅₀) of 50.0 µm, 45.1 µm, and 48.6 µm respectively. The corresponding diameter spans were 1.110, 1.039, and 1.088, respectively. Average particle size measurements were obtained using a Malvern MASTERSIZER^{™} 3000 Aero S particulate size analyzer. The corresponding specific surface area values for the red, green, and blue thermoplastic polyurethane particulates were 124.0 m²/kg, 136.3 m²/kg, and 127.2 m²/kg.

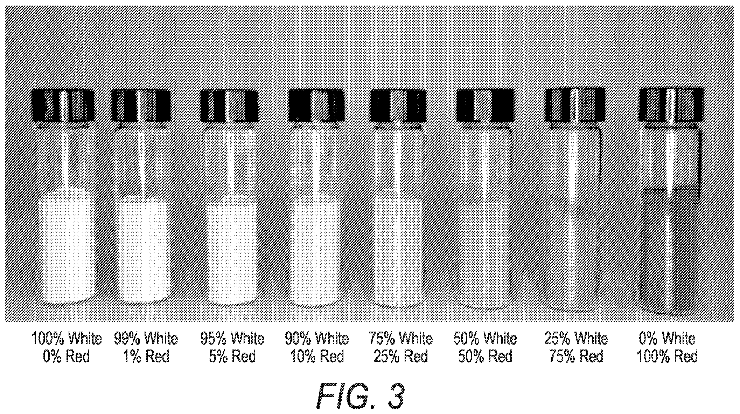

**Example 4: Preparation of Colored Particulate Blends.** Thermoplastic polyurethane particulates lacking a colorant and having an average particle size of 49 µm were prepared and dry blended in various ratios with the red thermoplastic polyurethane particulates prepared in Example 3 (average particle size = 50 µm). Dry blending was conducted by manual mixing the red thermoplastic polyurethane particulates with the thermoplastic polyurethane particulates lacking a colorant for a few minutes at the following mass ratios (relative to total thermoplastic polymer particulates of each type): 1%, 5%, 10%, 25%, 50%, and 75%. The resulting particulate blends were homogeneous in visual appearance and ranged in color from light pink to light red (see FIG. 3, which shows a photograph of the visual appearance of the blends at various blending ratios). Table 2 shows comparative properties of the uncolored thermoplastic polyurethane particulates, the red thermoplastic polyurethane particulates, and the resulting 50% colored particulate blend. As shown, the measured values in the colored particulate blend were essentially unchanged from those of the component thermoplastic polyurethane particulates. Since equal amounts of uncolored thermoplastic polyurethane particulates and red thermoplastic polyurethane particulates were used in this case, there is no weighting of the properties associated with one type of thermoplastic polyurethane particulate over the other. Angle of repose measurements were performed using a Hosokawa Micron Powder Characteristics Tester PT-R using ASTM D6393-14 "Standard Test Method for Bulk Solids" Characterized by Carr Indices." Aerated bulk density and tapped bulk density were determined by ASTM D6393-14. The homogeneous coloration appearance is believed to result from the ready flow properties and dense packing ability resulting from the high sphericity (circularity) and similar particle size distributions associated with both types of thermoplastic polyurethane particulates.

**Table 2**

| **Sample Type** | **Aerated Bulk Density (g/mL)** | **Tapped Bulk Density (g/mL)** | **Hausner Ratio** | **Angle of Repose (°)** |
|---|---|---|---|---|
| Uncolored Thermoplastic Polyurethane Particulates | 0.50 | 0.62 | 1.24 | 37.1 |
| Red Thermoplastic Polyurethane Particulates | 0.50 | 0.62 | 1.25 | 38.2 |
| Colored Particulate Blend | 0.49 | 0.62 | 1.25 | 38.3 |

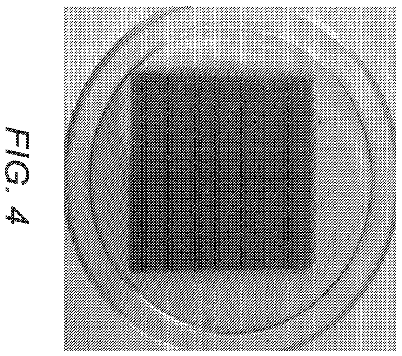

**Example 5. Printing of Colored Particulate Blends.** The 50% colored particulate blend of Example 4 was printed as a 30 mm x 30 mm square using a Snow White SLS printer system (Sharebot). The powder bed temperature was set to 135°C, with an actual measured chamber temperature of 108°C. After reaching the set temperature, a stabilization period of 1,200 seconds was allowed for temperature equilibration throughout the printing chamber. The laser was set to a power setting of 40% and a movement speed of 40,000 points per second. The good color homogeneity of the colored particulate blend was maintained in the printed object (FIG. 4).

All documents described herein are incorporated by reference herein for purposes of all jurisdictions where such practice is allowed, including any priority documents and/or testing procedures to the extent they are not inconsistent with this text. As is apparent from the foregoing general description and the specific embodiments, while forms of the disclosure have been illustrated and described, various modifications can be made without departing from the spirit and scope of the disclosure. Accordingly, it is not intended that the disclosure be limited thereby. For example, the compositions described herein may be free of any component, or composition not expressly recited or disclosed herein. Any method may lack any step not recited or disclosed herein. Likewise, the term "comprising" is considered synonymous with the term "including." Whenever a method, composition, element or group of elements is preceded with the transitional phrase "comprising," it is understood that we also contemplate the same composition or group of elements with transitional phrases "consisting essentially of," "consisting of," "selected from the group of consisting of," or "is" preceding the recitation of the composition, element, or elements and vice versa.

Unless otherwise indicated, all numbers expressing quantities of ingredients, properties such as molecular weight, reaction conditions, and so forth used in the present specification and associated claims are to be understood as being modified in all instances by the term "about." Accordingly, unless indicated to the contrary, the numerical parameters set forth in the following specification and attached claims are approximations that may vary depending upon the desired properties sought to be obtained by the embodiments of the present invention. At the very least, and not as an attempt to limit the application of the doctrine of equivalents to the scope of the claim, each numerical parameter should at least be construed in light of the number of reported significant digits and by applying ordinary rounding techniques.

Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces.

One or more illustrative embodiments are presented herein. Not all features of a physical implementation are described or shown in this application for the sake of clarity. It is understood that in the development of a physical embodiment of the present disclosure, numerous implementation-specific decisions must be made to achieve the developer's goals, such as compliance with system-related, business-related, government-related and other constraints, which vary by implementation and from time to time. While a developer's efforts might be time-consuming, such efforts would be, nevertheless, a routine undertaking for one of ordinary skill in the art and having benefit of this disclosure.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to one having ordinary skill in the art and having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope and spirit of the present disclosure. The embodiments illustratively disclosed herein suitably may be practiced in the absence of any element that is not specifically disclosed herein and/or any optional element disclosed herein.

## Claims

1. A colored particulate blend comprising:
a first plurality of thermoplastic polymer particulates having a first color and comprising a first thermoplastic polymer; and
a second plurality of thermoplastic polymer particulates having a second color different than the first color and comprising a second thermoplastic polymer;
wherein the colored particulate blend is printable by additive manufacturing, is visually homogeneous in appearance, and appears as a single color different than the first color and the second color.

2. The colored particulate blend of claim 1, wherein the first plurality of thermoplastic polymer particulates comprises a first colorant blended with the first thermoplastic polymer in an interior of the thermoplastic polymer particulates within the first plurality of thermoplastic polymer particulates, and the second plurality of thermoplastic polymer particulates optionally comprises a second colorant different than the first colorant blended with the second thermoplastic polymer in an interior of the thermoplastic polymer particulates within the second plurality of thermoplastic polymer particulates.

3. The colored particulate blend of claim 2, wherein the second colorant is not present.

4. The colored particulate blend of claim 3, wherein the single color is a lightened variant of the first color.

5. The colored particulate blend of claim 1, further comprising:
a third plurality of thermoplastic polymer particulates having a third color and comprising a third thermoplastic polymer;
wherein the third color is different than the first color and the second color, and the single color is not a lightened variant of the first color.

6. The colored particulate blend of claim 5, wherein the third plurality of thermoplastic polymer particulates comprises a third colorant blended with the third thermoplastic polymer in an interior of the thermoplastic polymer particulates within the third plurality of thermoplastic polymer particulates.

7. The colored particulate blend of claim 1, wherein at least the first color is a primary color.

8. The colored particulate blend of claim 1, wherein the first thermoplastic polymer and the second thermoplastic polymer are the same.

9. The colored particulate blend of claim 1, further comprising:
a first plurality of nanoparticles located upon an outer surface of at least a portion of the thermoplastic polymer particulates within the first plurality of thermoplastic polymer particulates, and a second plurality of nanoparticles located upon an outer surface of at least a portion of the thermoplastic polymer particulates within the second plurality of thermoplastic polymer particulates.

10. The colored particulate blend of claim 9, wherein the first plurality of nanoparticles and the second plurality of nanoparticles comprise one or more nanoparticles selected from the group consisting of oxide nanoparticles, carbon black, polymer nanoparticles, and any combination thereof.

11. The colored particulate blend of claim 1, wherein the first plurality of thermoplastic polymer particulates and the second plurality of thermoplastic polymer particulates have at least one of the following properties:
a circularity differing by about 25% or less,
a Hausner ratio differing by about 25% or less,
an angle of repose differing by about 25% or less,
a circularity within a range of about 0.9 to about 1.0,
a Hausner ratio within a range of about 1.0 to about 1.5, or
an angle of repose within a range of about 20° to about 45°.

12. The colored particulate blend of claim 1, wherein the first plurality of thermoplastic polymer particulates and the second plurality of thermoplastic polymer particulates have an average diameter differing by about 10% or less.

13. The colored particulate blend of claim 1, wherein the first plurality of thermoplastic polymer particulates and the second plurality of thermoplastic polymer particulates have an average diameter ranging from about 10 µm to about 120 µm and a diameter span ranging from about 0.2 to about 2.

14. The colored particulate blend of claim 1, wherein a mass ratio of the first plurality of thermoplastic polymer particulates to the second plurality of thermoplastic polymer particulates ranges from about 1:99 to about 99: 1.

15. A method comprising:
providing a first plurality of thermoplastic polymer particulates having a first color and comprising a first thermoplastic polymer;
providing a second plurality of thermoplastic polymer particulates having a second color different than the first color and comprising a second thermoplastic polymer;
wherein the first plurality of thermoplastic polymer particulates and the second plurality of thermoplastic polymer particulates are each produced separately by melt emulsification; and
combining the first plurality of thermoplastic polymer particulates with the second plurality of thermoplastic polymer particulates to obtain a colored particulate blend that visually homogeneous in appearance and appears as a single color different than the first color and the second color.

16. The method of claim 15, wherein the first plurality of thermoplastic polymer particulates comprises a first colorant blended with the first thermoplastic polymer in an interior of the thermoplastic polymer particulates within the first plurality of thermoplastic polymer particulates, and the second plurality of thermoplastic polymer particulates optionally comprises a second colorant different than the first colorant blended with the second thermoplastic polymer in an interior of the thermoplastic polymer particulates within the second plurality of thermoplastic polymer particulates.

17. The method of claim 16, wherein the first colorant and the second colorant, if present, are introduced to the first and second thermoplastic polymers, respectively, by combining a colored masterbatch thermoplastic polymer with a base thermoplastic polymer lacking a colorant, and performing melt blending of the colored masterbatch thermoplastic polymer and the base thermoplastic polymer lacking the colorant;
wherein the melt emulsification is performed after performing the melt blending.

18. The method of claim 15, wherein the first plurality of thermoplastic polymer particulates further comprises a first plurality of nanoparticles located upon an outer surface of a least a portion of the thermoplastic polymer particulates within the first plurality of thermoplastic polymer particulates, and the second plurality of thermoplastic polymer particulates further comprises a second plurality of nanoparticles located upon an outer surface of at least a portion of the thermoplastic polymer particulates within the second plurality of thermoplastic polymer particulates.

19. The method of claim 15, wherein the first plurality of thermoplastic polymer particulates and the second plurality of thermoplastic polymer particulates have at least one of the following properties:
a circularity differing by about 25% or less,
a Hausner ratio differing by about 25% or less,
an angle of repose differing by about 25% or less,
a circularity within a range of about 0.9 to about 1.0,
a Hausner ratio within a range of about 1.0 to about 1.5,
an angle of repose within a range of about 20° to about 45°,
an average diameter differing by about 10% or less, or
an average diameter ranging from about 10 µm to about 120 µm and a diameter span ranging from about 0.2 to about 2.

20. A method comprising:
providing a first plurality of thermoplastic polymer particulates having a first color and comprising a first thermoplastic polymer;
providing a second plurality of thermoplastic polymer particulates having a second color different than the first color and comprising a second thermoplastic polymer;
wherein the first plurality of thermoplastic polymer particulates and the second plurality of thermoplastic polymer particulates have at least one of the following properties:
a circularity differing by about 25% or less,
a Hausner ratio differing by about 25% or less,
an angle of repose differing by about 25% or less,
a circularity within a range of about 0.9 to about 1.0,
a Hausner ratio within a range of about 1.0 to about 1.5,
an angle of repose within a range of about 20° to about 45°,
an average diameter differing by about 10% or less, or
an average diameter ranging from about 10 µm to about 120 µm and a diameter span ranging from about 0.2 to about 2; and
combining the first plurality of thermoplastic polymer particulates with the second plurality of thermoplastic polymer particulates to obtain a colored particulate blend that is visually homogeneous in appearance and appears as a single color different than the first color and the second color.
